# EUROPEAN PATENT APPLICATION

(11) **EP 4 518 557 A1**
(43) Date of publication of application: **05.03.2025**
(21) Application number: 23796845.8
(22) Date of filing: 27.04.2023
(51) Int. Cl.: H04W 74/08, H04W 72/04, H04W 72/25, H04W 24/08, H04W 74/00, H04W 92/18, H04W 4/40, H04W 72/21

(54) **FILTERING OPERATION METHOD AND DEVICE FOR SHARED COT AND SHARED FFP IN SL-U**

(30) Priority: 28.04.2022 KR 20220052752; 27.09.2022 KR 20220122140; 09.01.2023 KR 20230002965
(71) Applicant: LG Electronics Inc., Yeongdeungpo-gu Seoul 07336 (KR)
(72) Inventor: PARK, Giwon, Seoul 06772 (KR); LEE, Seungmin, Seoul 06772 (KR); BACK, Seoyoung, Seoul 06772 (KR)
(74) Representative: Mooser, Sebastian Thomas
(86) International application number: PCT/KR2023/005786
(87) International publication number: WO 2023/211203

(57) **Abstract**

An operation method of a first device (100) in a wireless communication system is presented. The method may comprise the steps of: receiving SCI related to COT from a second device (200); and determining, on the basis of a first destination ID included in the SCI and first ID of the first device, to use the COT.

## Description

### TECHNICAL FIELD

This disclosure relates to a wireless communication system.

### BACKGROUND

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an entity having an infrastructure (or infra) established therein, and so on. The V2X may be spread into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR).

### DISCLOSURE

### TECHNICAL SOLUTION

According to an embodiment, a method for performing, by a first device, wireless communication may be proposed. For example, the method may comprise: receiving, from a second device, sidelink control information, SCI, related to a channel occupancy time, COT; determining to use the COT, based on a first destination identifier, ID, included in the SCI and a first ID of the first device; performing channel sensing for a first resource within the COT; and transmitting, to the second device, SL data using the first resource, based on a result of the channel sensing being IDLE.

According to an embodiment of the present disclosure, a first device for performing wireless communication may be proposed. For example, the first device may comprise: at least one transceiver; at least one processor; and at least one memory operably connected to the at least one processor, and storing instructions that, based on being executed by the at least one processor, cause the first device to perform operations. For example, the operations may comprise: receiving, from a second device, sidelink control information, SCI, related to a channel occupancy time, COT; determining to use the COT, based on a first destination identifier, ID, included in the SCI and a first ID of the first device; performing channel sensing for a first resource within the COT; and transmitting, to the second device, SL data using the first resource, based on a result of the channel sensing being IDLE.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: receiving, from a second UE, sidelink control information, SCI, related to a channel occupancy time, COT; determining to use the COT, based on a first destination identifier, ID, included in the SCI and a first ID of the first UE; performing channel sensing for a first resource within the COT; and transmitting, to the second UE, SL data using the first resource, based on a result of the channel sensing being IDLE.

According to an embodiment of the present disclosure, a non-transitory computer-readable storage medium storing instructions may be proposed. For example, the instructions, based on being executed, may cause a first device to: receive, from a second device, sidelink control information, SCI, related to a channel occupancy time, COT; determine to use the COT, based on a first destination identifier, ID, included in the SCI and a first ID of the first device; perform channel sensing for a first resource within the COT; and transmit, to the second device, SL data using the first resource, based on a result of the channel sensing being IDLE.

According to an embodiment of the present disclosure, a method for performing, by second device, wireless communication may be proposed. For example, the method may comprise: transmitting, to a first device, sidelink control information, SCI, related to a channel occupancy time, COT; and receiving SL data based on a first resource, wherein the SL data may be transmitted based on a result of channel sensing for the first resource being IDLE, wherein the first resource may be included within the COT, and wherein the COT may be determined to be used, based on a first destination identifier, ID, included in the SCI and a first ID of the first device.

According to an embodiment of the present disclosure, a second device for performing wireless communication may be proposed. For example, the second device may comprise: at least one transceiver; at least one processor; and at least one memory operably connected to the at least one processor, and storing instructions that, based on being executed by the at least one processor, cause the second device to perform operations. For example, the operations may comprise: transmitting, to a first device, sidelink control information, SCI, related to a channel occupancy time, COT; and receiving SL data based on a first resource, wherein the SL data may be transmitted based on a result of channel sensing for the first resource being IDLE, wherein the first resource may be included within the COT, and wherein the COT may be determined to be used, based on a first destination identifier, ID, included in the SCI and a first ID of the first device.

### BRIEF DESCRIPTION OF THE DRAWINGS

FIG. 1 shows a communication structure that can be provided in a 6G system, according to one embodiment of the present disclosure.
FIG. 2 shows an electromagnetic spectrum, according to one embodiment of the present disclosure.
FIG. 3 shows a structure of an NR system, based on an embodiment of the present disclosure.
FIG. 4 shows a radio protocol architecture, based on an embodiment of the present disclosure.
FIG. 5 shows a structure of a radio frame of an NR, based on an embodiment of the present disclosure.
FIG. 6 shows a structure of a slot of an NR frame, based on an embodiment of the present disclosure.
FIG. 7 shows an example of a BWP, based on an embodiment of the present disclosure.
FIG. 8 shows a procedure of performing V2X or SL communication by a UE based on a transmission mode, based on an embodiment of the present disclosure.
FIG. 9 shows three cast types, based on an embodiment of the present disclosure.
FIG. 10 shows an example of a wireless communication system supporting an unlicensed band, based on an embodiment of the present disclosure.
FIG. 11 shows a method of occupying resources in an unlicensed band, based on an embodiment of the present disclosure.
FIG. 12 shows a case in which a plurality of LBT-SBs are included in an unlicensed band, based on an embodiment of the present disclosure.
FIG. 13 shows CAP operations performed by a base station to transmit a downlink signal through an unlicensed band, based on an embodiment of the present disclosure.
FIG. 14 shows type 1 CAP operations performed by a UE to transmit an uplink signal, based on an embodiment of the present disclosure.
FIG. 15 shows a contention operation for a channel of an LBE and an FBE, according to one embodiment of the present disclosure.
FIG. 16 shows an example of operations performed within a Shared COT, according to one embodiment of the present disclosure.
FIG. 17 shows an embodiment of an FBE operation, according to one embodiment of the present disclosure.
FIG. 18 shows a COT information sharing procedure for a COT sharing UE, according to one embodiment of the present disclosure.
FIG. 19 shows a procedure for a first device to perform wireless communication, according to one embodiment of the present disclosure.
FIG. 20 shows a procedure for a second device to perform wireless communication, according to one embodiment of the present disclosure.
FIG. 21 shows a communication system 1, based on an embodiment of the present disclosure.
FIG. 22 shows wireless devices, based on an embodiment of the present disclosure.
FIG. 23 shows a signal process circuit for a transmission signal, based on an embodiment of the present disclosure.
FIG. 24 shows another example of a wireless device, based on an embodiment of the present disclosure.
FIG. 25 shows a hand-held device, based on an embodiment of the present disclosure.
FIG. 26 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free IoT devices, (vi) ultra-reliable connectivity, and (vii) connected intelligence with a machine learning capability. The vision of the 6G system can be in four aspects: intelligent connectivity, deep connectivity, holographic connectivity, and ubiquitous connectivity, and the 6G system may satisfy the requirements as shown in Table 1 below. In other words, Table 1 is an example of the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

6G system may have key factors such as eMBB(Enhanced mobile broadband), URLLC(Ultra-reliable low latency communications), mMTC(massive machine-type communication), AI integrated communication, Tactile internet, High throughput, High network capacity, High energy efficiency, Low backhaul and access network congestion, Enhanced data security.

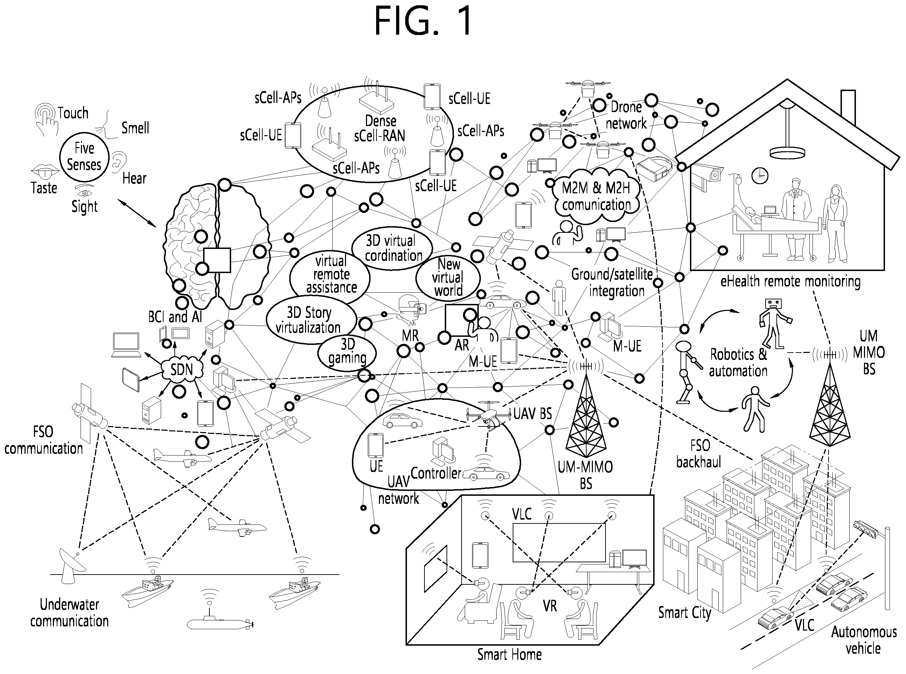

FIG. 1 shows a communication structure that can be provided in a 6G system, according to one embodiment of the present disclosure. The embodiment of FIG. 1 may be combined with various embodiments of the present disclosure.

6G systems are expected to have 50 times higher simultaneous radio connectivity than 5G radio systems. URLLC, a key feature of 5G, will become a more dominant technology in 6G communications by providing end-to-end delay of less than 1 ms. In 6G systems, volumetric spectral efficiency will be much better, as opposed to the area spectral efficiency often used today. 6G systems will be able to offer very long battery life and advanced battery technologies for energy harvesting, so mobile devices will not need to be recharged separately in 6G systems. In 6G, new network characteristics may be as follows.
- Satellites integrated network: To provide a global mobile population, 6G is expected to be integrated with satellite. The integration of terrestrial, satellite, and airborne networks into a single wireless communication system is important for 6G.
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer: 6G wireless networks will deliver power to charge batteries of devices such as smartphones and sensors. Therefore, wireless information and energy transfer (WIET) will be integrated.
- Ubiquitous super 3D connectivity: Super 3D connection will be generated from 6G ubiquity to access networks and core network functions on drones and very low Earth orbit satellites.

Given the above new network characteristics of 6G, some common requirements may be as follows
- small cell networks: The idea of small cell networks was introduced in cellular systems to improve received signal quality as a result of improved processing throughput, energy efficiency, and spectral efficiency. As a result, small cell networks are an essential characteristic for communication systems over 5G and beyond 5G (5GB). Therefore, 6G communication systems will also adopt the characteristics of small cell networks.
- Ultra-dense heterogeneous network: Ultra-dense heterogeneous networks will be another important characteristic of 6G communication systems. Multi-tier networks composed of heterogeneous networks will improve overall QoS and reduce costs.
- High-capacity backhaul: Backhaul connection is characterized by high-capacity backhaul networks to support large volumes of traffic. High-speed fiber optics and free-space optics (FSO) systems may be a possible solution to this problem.
- Radar technology integrated with mobile technology: High-precision localization (or location-based services) through communication is one of the features of 6G wireless communication systems. Therefore, radar systems will be integrated with 6G networks.
- Softwarization and virtualization: Softwareization and virtualization are two important features that are fundamental to the design process in a 5GB network to ensure flexibility, reconfigurability, and programmability. In addition, billions of devices may be shared on a shared physical infrastructure.

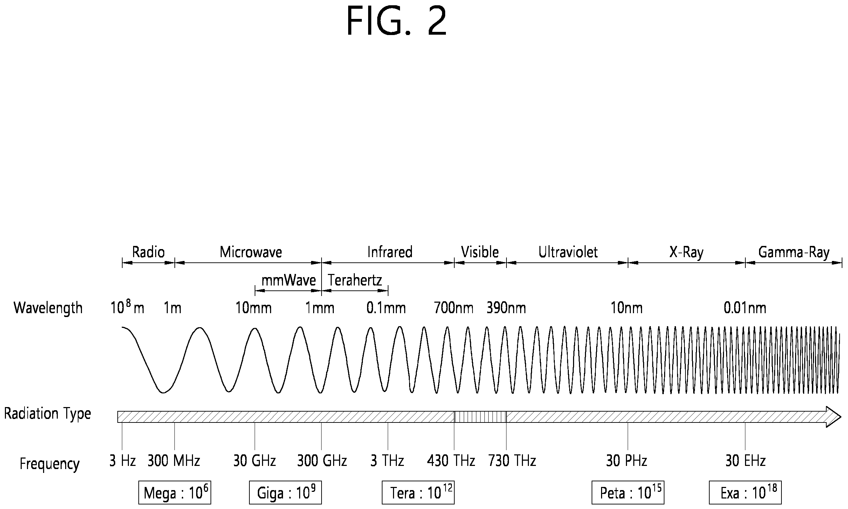

The following describes the core implementation technologies for 6G systems.
- Artificial Intelligence: The most important and new technology that will be introduced in the 6G system is AI. The 4G system did not involve AI. 5G systems will support partial or very limited AI. However, 6G systems will be fully AI-enabled for automation. Advances in machine learning will create more intelligent networks for real-time communication in 6G. The introduction of AI in telecommunications may streamline and improve real-time data transmission. AI may use numerous analytics to determine the way complex target operations are performed, which means AI can increase efficiency and reduce processing delays. Time-consuming tasks such as handover, network selection, and resource scheduling can be done instantly by using AI. AI may also play an important role in M2M, machine-to-human, and human-to-machine communications. In addition, AI may become a rapid communication in Brain Computer Interface (BCI). AI-based communication systems can be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Bmeaforming
- Optical wireless technology
- FSO Backhaul Network
- Non-Terrestrial Networks, NTN
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Autonomous Driving, Self-driving: For perfect autonomous driving, vehicles must communicate with each other to inform each other of dangerous situations, or with infrastructure such as parking lots and traffic lights to check information such as the location of parking information and signal change times. Vehicle to Everything (V2X), a key element in building an autonomous driving infrastructure, is a technology that allows vehicles to communicate and share information with various elements on the road, in order to perform autonomous driving, such as vehicle-to-vehicle (V2V) wireless communication and vehicle-to-infrastructure (V2I) wireless communication. In order to maximize the performance of autonomous driving and ensure high safety, fast transmission speeds and low latency technologies are essential. In addition, in the future, autonomous driving will go beyond delivering warnings or guidance messages to a driver to actively intervene in vehicle operation and directly control the vehicle in dangerous situations, so the amount of information that needs to be transmitted and received will be vast, and 6G is expected to maximize autonomous driving with faster transmission speeds and lower latency than 5G.

For the sake of clarity, the description focuses on 5G NR, but the technical ideas of one embodiment of the present disclosure are not limited thereto. Various embodiments of the present disclosure may also be applicable to 6G communication systems.

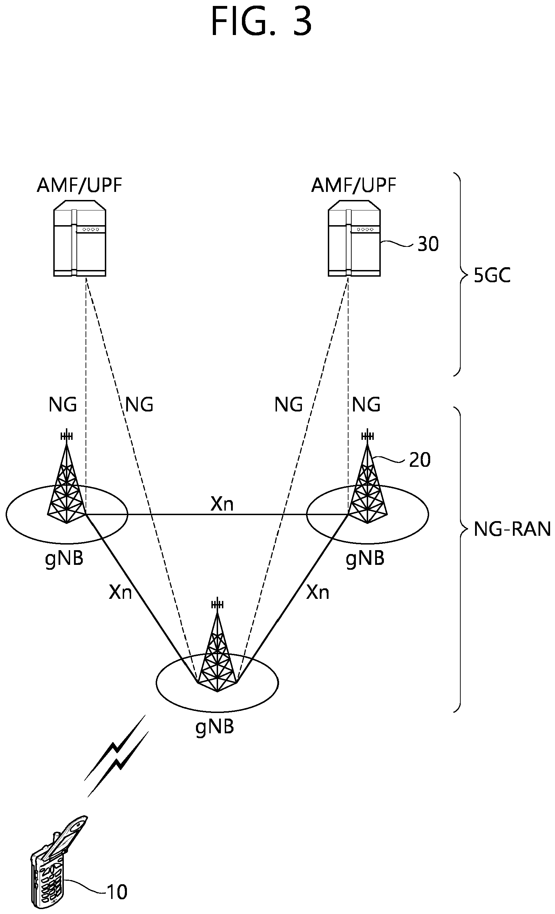

FIG. 3 shows a structure of an NR system, based on an embodiment of the present disclosure. The embodiment of FIG. 3 may be combined with various embodiments of the present disclosure.

Referring to FIG. 3, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 3 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

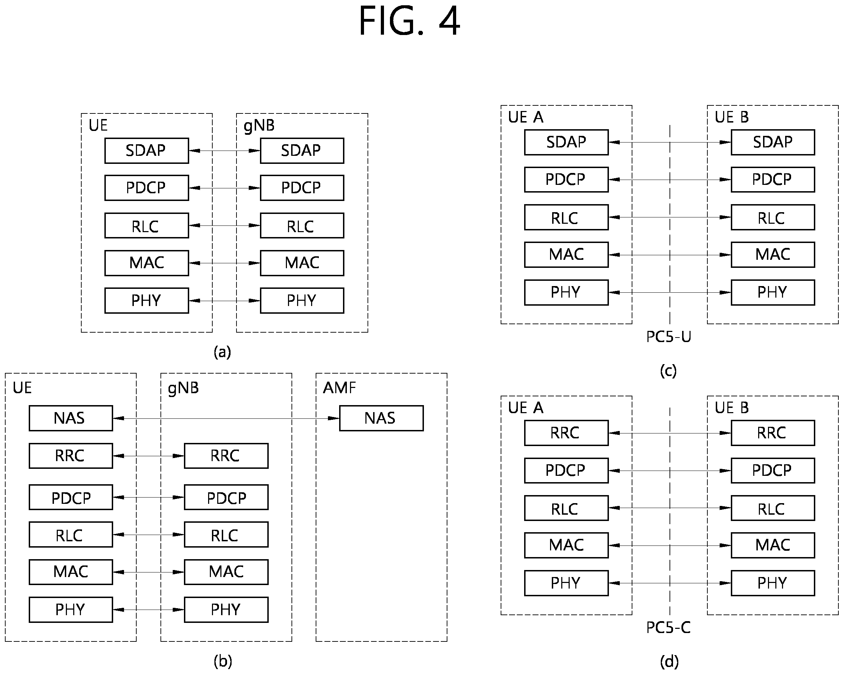

FIG. 4 shows a radio protocol architecture, based on an embodiment of the present disclosure. The embodiment of FIG. 4 may be combined with various embodiments of the present disclosure. Specifically, (a) of FIG. 4 shows a radio protocol stack of a user plane for Uu communication, and (b) of FIG. 4 shows a radio protocol stack of a control plane for Uu communication. (c) of FIG. 4 shows a radio protocol stack of a user plane for SL communication, and (d) of FIG. 4 shows a radio protocol stack of a control plane for SL communication.

Referring to FIG. 4, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

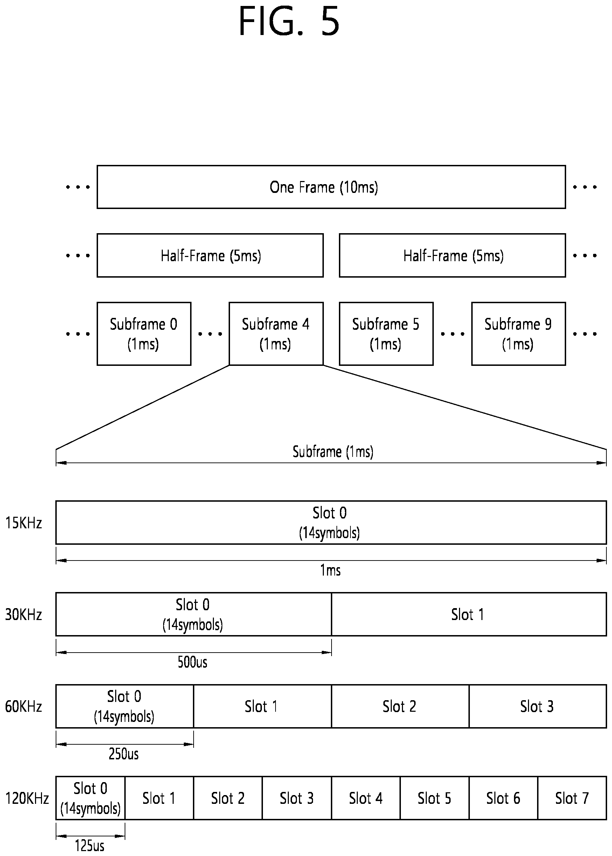

FIG. 5 shows a structure of a radio frame of an NR, based on an embodiment of the present disclosure. The embodiment of FIG. 5 may be combined with various embodiments of the present disclosure.

Referring to FIG. 5, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot (N^{slot}_{symb}), the number of slots per frame (N^{frame,u}ₛₗₒₜ), and the number of slots per subframe (N^{subframe,u}ₛₗₒₜ), according to an SCS configuration (u), when Normal CP or Extended CP is used.

**[Table 2]**

| CP Type | SCS (15*2^{u}) | N^{slot}_{symb} | N^{frame,u}ₛₗₒₜ | N^{subframe,u}ₛₗₒₜ |
|---|---|---|---|---|
| Normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| Extended CP | 60kHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

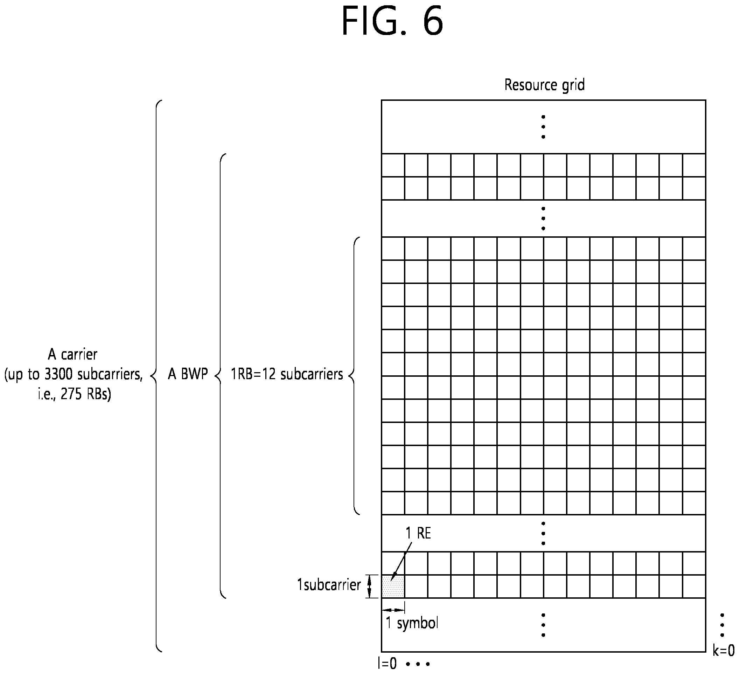

FIG. 6 shows a structure of a slot of an NR frame, based on an embodiment of the present disclosure. The embodiment of FIG. 6 may be combined with various embodiments of the present disclosure.

Referring to FIG. 6, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on).

A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

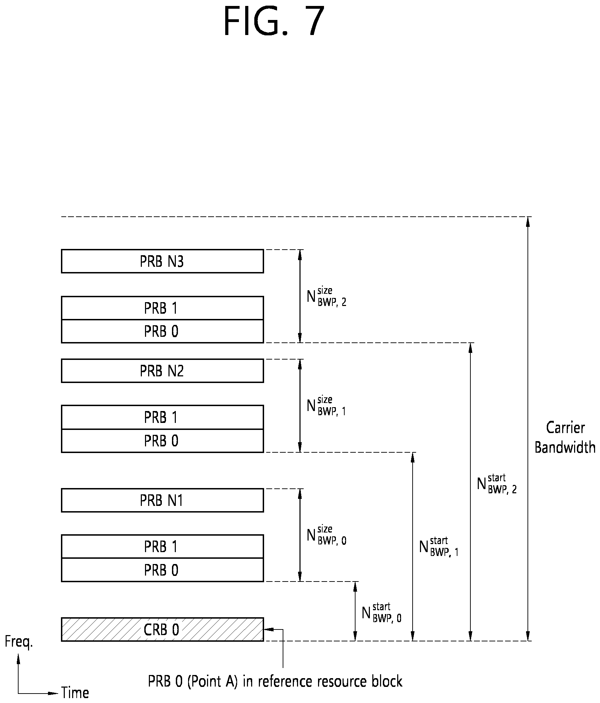

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

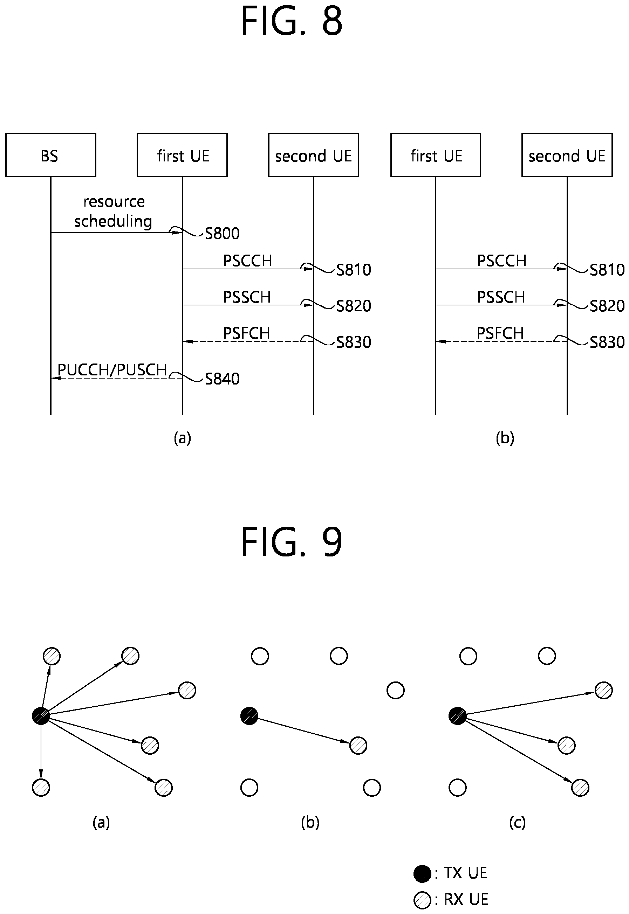

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 8, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

**[Table 5]**

| Value of 2nd-stage SCI format field | 2nd-stage SCI format |
|---|---|
| 00 | SCI format 2-A |
| 01 | SCI format 2-B |
| 10 | Reserved |
| 11 | Reserved |

**[Table 6]**

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

**[Table 7]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

FIG. 9 shows three cast types, in accordance with an embodiment of the present disclosure. The embodiment of FIG. 9 may be combined with various embodiments of the present disclosure. Specifically, FIG. 9(a) shows broadcast-type SL communication, FIG. 9(b) shows unicast type-SL communication, and FIG. 9(c) shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Meanwhile, in the conventional unlicensed spectrum (NR-U), a communication method between a UE and a base station is supported in an unlicensed band. In addition, a mechanism for supporting communication in an unlicensed band between sidelink UEs is planned to be supported in Rel-18.

In the present disclosure, a channel may refer to a set of frequency domain resources in which Listen-Before-Talk (LBT) is performed. In NR-U, the channel may refer to an LBT bandwidth with 20 MHz and may have the same meaning as an RB set. For example, the RB set may be defined in section 7 of 3GPP TS 38.214 V17.0.0.

In the present disclosure, channel occupancy (CO) may refer to time/frequency domain resources obtained by the base station or the UE after LBT success.

In the present disclosure, channel occupancy time (COT) may refer to time domain resources obtained by the base station or the UE after LBT success. It may be shared between the base station (or the UE) and the UE (or the base station) that obtained the CO, and this may be referred to as COT sharing. Depending on the initiating device, this may be referred to as gNB-initiated COT or UE-initiated COT.

Hereinafter, a wireless communication system supporting an unlicensed band/shared spectrum will be described.

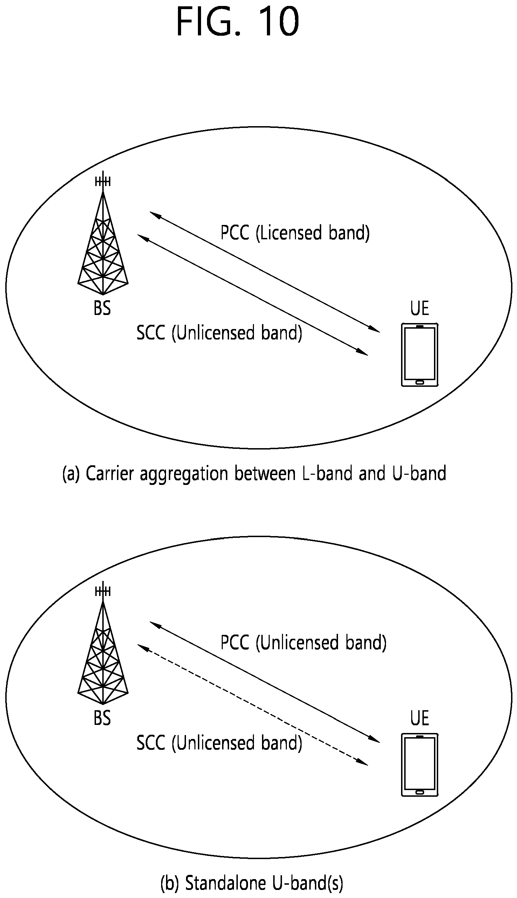

FIG. 10 shows an example of a wireless communication system supporting an unlicensed band, based on an embodiment of the present disclosure. For example, FIG. 10 may include an unlicensed spectrum (NR-U) wireless communication system. The embodiment of FIG. 10 may be combined with various embodiments of the present disclosure.

In the following description, a cell operating in a licensed band (hereinafter, L-band) may be defined as an L-cell, and a carrier of the L-cell may be defined as a (DL/UL/SL) LCC. In addition, a cell operating in an unlicensed band (hereinafter, U-band) may be defined as a U-cell, and a carrier of the U-cell may be defined as a (DL/UL/SL) UCC. The carrier/carrier-frequency of a cell may refer to the operating frequency (e.g., center frequency) of the cell. A cell/carrier (e.g., CC) is commonly called a cell.

When the base station and the UE transmit and receive signals on carrier-aggregated LCC and UCC as shown in (a) of FIG. 10, the LCC and the UCC may be configured as a primary CC (PCC) and a secondary CC (SCC), respectively. The base station and the UE may transmit and receive signals on one UCC or on a plurality of carrier-aggregated UCCs as shown in (b) of FIG. 10. In other words, the base station and the UE may transmit and receive signals only on UCC(s) without using any LCC. For a standalone operation, PRACH transmission, PUCCH transmission, PUSCH transmission, SRS transmission, etc. may be supported on a UCell.

In the embodiment of FIG. 10, the base station may be replaced with the UE. In this case, for example, PSCCH transmission, PSSCH transmission, PSFCH transmission, S-SSB transmission, etc. may be supported on a UCell.

Unless otherwise noted, the definitions below are applicable to the following terminologies used in the present disclosure.
- Channel: a carrier or a part of a carrier composed of a contiguous set of RBs in which a channel access procedure is performed in a shared spectrum.
- Channel access procedure (CAP): a procedure of assessing channel availability based on sensing before signal transmission in order to determine whether other communication node(s) are using a channel. A basic sensing unit is a sensing slot with a duration of Tₛₗ = 9 us. The base station or the UE senses a channel during a sensing slot duration. If power detected for at least 4 us within the sensing slot duration is less than an energy detection threshold Xₜₕᵣₑₛₕ, the sensing slot duration Tₛₗ is considered to be idle. Otherwise, the sensing slot duration Tₛₗ = 9 us is considered to be busy. CAP may also be referred to as listen before talk (LBT).
- Channel occupancy: transmission(s) on channel(s) by the base station/UE after a channel access procedure.
- Channel occupancy time (COT): a total time during which the base station/UE and any base station/UE(s) sharing channel occupancy can perform transmission(s) on a channel after the base station/UE perform a channel access procedure. In the case of determining COT, if a transmission gap is less than or equal to 25 us, the gap duration may be counted in the COT. The COT may be shared for transmission between the base station and corresponding UE(s).
- DL transmission burst: a set of transmissions without any gap greater than 16 us from the base station. Transmissions from the base station, which are separated by a gap exceeding 16 us are considered as separate DL transmission bursts. The base station may perform transmission(s) after a gap without sensing channel availability within a DL transmission burst.
- UL or SL transmission burst: a set of transmissions without any gap greater than 16 us from the UE. Transmissions from the UE, which are separated by a gap exceeding 16 us are considered as separate UL or SL transmission bursts. The UE may perform transmission(s) after a gap without sensing channel availability within a UL or SL transmission burst.
- Discovery burst: a DL transmission burst including a set of signal(s) and/or channel(s) confined within a window and associated with a duty cycle. In the LTE-based system, the discovery burst may be transmission(s) initiated by the base station, which includes PSS, an SSS, and cell-specific RS (CRS) and further includes non-zero power CSI-RS. In the NR-based system, the discover burst may be transmission(s) initiated by the base station, which includes at least an SS/PBCH block and further includes CORESET for a PDCCH scheduling a PDSCH carrying SIB1, the PDSCH carrying SIB1, and/or non-zero power CSI-RS.

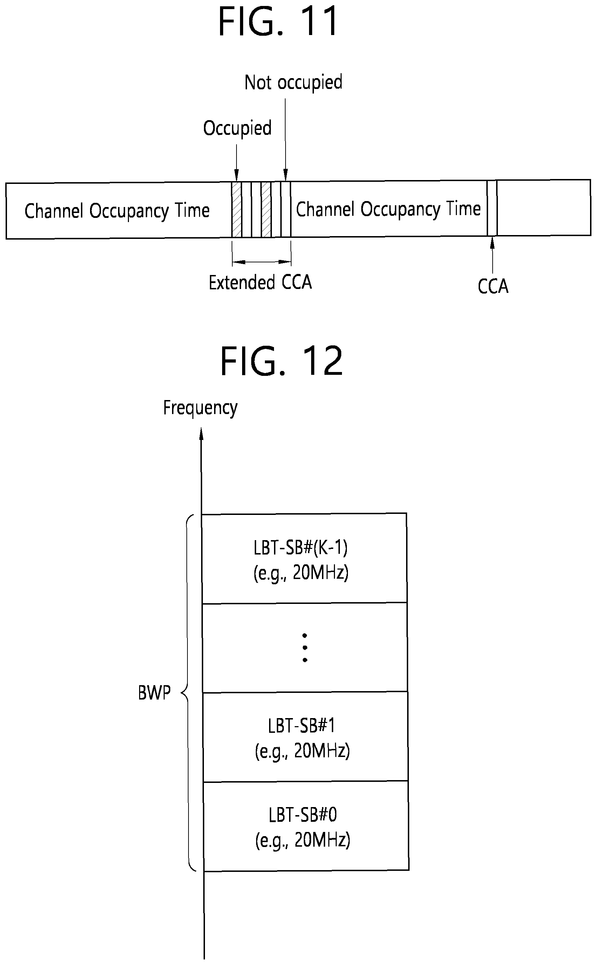

FIG. 11 shows a method of occupying resources in an unlicensed band, based on an embodiment of the present disclosure. The embodiment of FIG. 11 may be combined with various embodiments of the present disclosure.

Referring to FIG. 11, a communication node (e.g., base station, UE) within an unlicensed band should determine whether other communication node(s) is using a channel before signal transmission. To this end, the communication node within the unlicensed band may perform a channel access procedure (CAP) to access channel(s) on which transmission(s) is performed. The channel access procedure may be performed based on sensing. For example, the communication node may perform carrier sensing (CS) before transmitting signals so as to check whether other communication node(s) perform signal transmission. When the other communication node(s) perform no signal transmission, it is the that clear channel assessment (CCA) is confirmed. If a CCA threshold (e.g., X_{Thresh}) is predefined or configured by a higher layer (e.g., RRC), the communication node may determine that the channel is busy if the detected channel energy is higher than the CCA threshold. Otherwise, the communication node may determine that the channel is idle. If it is determined that the channel is idle, the communication node may start the signal transmission in the unlicensed band. The CAP may be replaced with the LBT.

Table 8 shows an example of the channel access procedure (CAP) supported in NR-U.

**[Table 8]**

| | Type | Explanation |
|---|---|---|
| DL | Type 1 CAP | CAP with random back-off |
| | | - time duration spanned by the sensing slots that are sensed to be idle before a downlink transmission(s) is random |
| | Type 2 CAP | CAP without random back-off |
| | - Type 2A, 2B, 2C | - time duration spanned by sensing slots that are sensed to be idle before a downlink transmission(s) is deterministic |
| UL or SL | Type 1 CAP | CAP with random back-off |
| | | - time duration spanned by the sensing slots that are sensed to be idle before an uplink or sidelink transmission(s) is random |
| | Type 2 CAP | CAP without random back-off |
| | - Type 2A, 2B, 2C | - time duration spanned by sensing slots that are sensed to be idle before an uplink or sidelink transmission(s) is deterministic |

Referring to Table 8, the LBT type or CAP for DL/UL/SL transmission may be defined. However, Table 8 is only an example, and a new type or CAP may be defined in a similar manner. For example, the type 1 (also referred to as Cat-4 LBT) may be a random back-off based channel access procedure. For example, in the case of Cat-4, the contention window may change. For example, the type 2 can be performed in case of COT sharing within COT acquired by the base station (gNB) or the UE.

Hereinafter, LBT-SubBand (SB) (or RB set) will be described.

In a wireless communication system supporting an unlicensed band, one cell (or carrier (e.g., CC)) or BWP configured for the UE may have a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A set of RBs included in an LBT-SB may be configured by higher-layer (e.g., RRC) signaling. Accordingly, one or more LBT-SBs may be included in one cell/BWP based on (i) the BW of the cell/BWP and (ii) RB set allocation information.

FIG. 12 shows a case in which a plurality of LBT-SBs are included in an unlicensed band, based on an embodiment of the present disclosure. The embodiment of FIG. 12 may be combined with various embodiments of the present disclosure.

Referring to FIG. 12, a plurality of LBT-SBs may be included in the BWP of a cell (or carrier). An LBT-SB may have, for example, a 20-MHz band. The LBT-SB may include a plurality of contiguous (P)RBs in the frequency domain, and thus may be referred to as a (P)RB set. While not shown, a guard band (GB) may be interposed between LBT-SBs. Accordingly, the BWP may be configured in the form of {LBT-SB #0 (RB set #0)+GB #0+LBT-SB #1 (RB set #1+GB #1) + ... +LBT-SB #(K-1) (RB set (#K-1))}. For convenience, LBT-SB/RB indexes may be configured/defined in an increasing order from the lowest frequency to the highest frequency.

Hereinafter, a channel access priority class (CAPC) will be described.

The CAPCs of MAC CEs and radio bearers may be fixed or configured to operate in FR1:
- Fixed to lowest priority for padding buffer status report (BSR) and recommended bit rate MAC CE;
- Fixed to highest priority for SRB0, SRB1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 9 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

**[Table 9]**

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

Hereinafter, a method of transmitting a downlink signal through an unlicensed band will be described. For example, a method of transmitting a downlink signal through an unlicensed band may be applied to a method of transmitting a sidelink signal through an unlicensed band.

The base station may perform one of the following channel access procedures (e.g., CAP) for downlink signal transmission in an unlicensed band.

### (1) Type 1 downlink (DL) CAP Method

In the type 1 DL CAP, the length of a time duration spanned by sensing slots sensed to be idle before transmission(s) may be random. The type 1 DL CAP may be applied to the following transmissions:
- Transmission(s) initiated by the base station including (i) a unicast PDSCH with user plane data or (ii) the unicast PDSCH with user plane data and a unicast PDCCH scheduling user plane data, or
- Transmission(s) initiated by the base station including (i) a discovery burst only or (ii) a discovery burst multiplexed with non-unicast information.

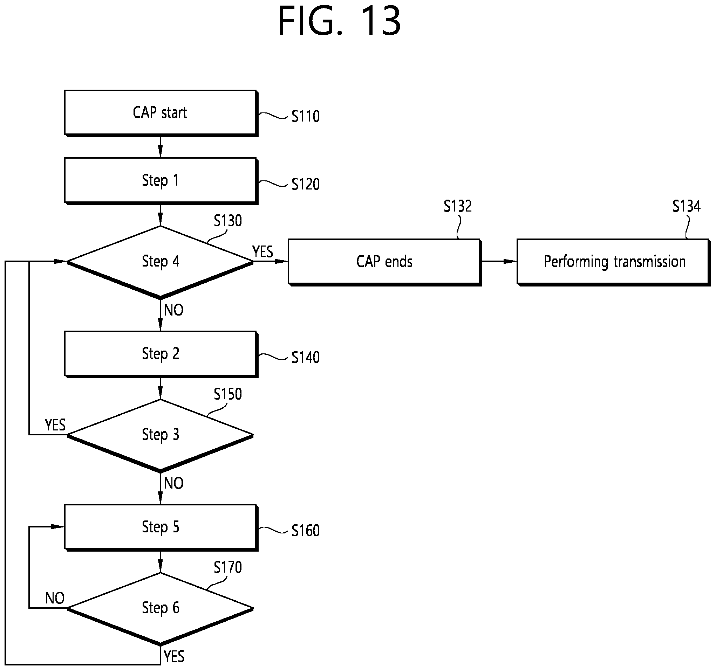

FIG. 13 shows CAP operations performed by a base station to transmit a downlink signal through an unlicensed band, based on an embodiment of the present disclosure. The embodiment of FIG. 13 may be combined with various embodiments of the present disclosure.

Referring to FIG. 13, the base station may sense whether a channel is idle for sensing slot durations of a defer duration T_{d}. Then, if a counter N is zero, the base station may perform transmission (S134). In this case, the base station may adjust the counter N by sensing the channel for additional sensing slot duration(s) according to the following steps:
Step 1) (S120) The base station sets N to Nᵢₙᵢₜ (N= Nᵢₙᵢₜ), where Nᵢₙᵢₜ is a random number uniformly distributed between 0 and CWₚ. Then, step 4 proceeds.
Step 2) (S140) If N>0 and the base station determines to decrease the counter, the base station sets N to N-1 (N=N-1).
Step 3) (S150) The base station senses the channel for the additional sensing slot duration. If the additional sensing slot duration is idle (Y), step 4 proceeds. Otherwise (N), step 5 proceeds.
Step 4) (S130) If N=0 (Y), the base station terminates the CAP (S132). Otherwise (N), step 2 proceeds.
Step 5) (S160) The base station senses the channel until either a busy sensing slot is detected within an additional defer duration T_{d} or all the slots of the additional defer duration T_{d} are detected to be idle.
Step 6) (S170) If the channel is sensed to be idle for all the slot durations of the additional defer duration T_{d} (Y), step 4 proceeds. Otherwise (N), step 5 proceeds.

Table 10 shows that mₚ, a minimum contention window (CW), a maximum CW, a maximum channel occupancy time (MCOT), and an allowed CW size, which are applied to the CAP, vary depending on channel access priority classes.

**[Table 10]**

| Channel Access Priority Class (p) | mₚ | CW_{min,p} | CW_{max,p} | Tmcot,p | allowed CWₚ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 10, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

The defer duration T_{d} is configured in the following order: duration T_{f}(16 us) + mₚ consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on HARQ-ACK feedback (e.g., the ratio of ACK or NACK) for a previous DL burst (e.g., PDSCH) (CW size update). For example, CWₚ may be initialized to CW_{min,p} based on the HARQ-ACK feedback for the previous DL burst. Alternatively, CWₚ may be increased to the next higher allowed value or maintained as it is.

### (2) Type 2 downlink (DL) CAP Method

In the type 2 DL CAP, the length of a time duration spanned by sensing slots sensed to be idle before transmission(s) may be determined. The type 2 DL CAP is classified into type 2A/2B/2C DL CAPs.

The type 2A DL CAP may be applied to the following transmissions. In the type 2A DL CAP, the base station may perform transmission immediately after the channel is sensed to be idle at least for a sensing duration T_{short_dl} = 25 us. Herein, T_{short_dl} includes the duration T_{f}(=16 us) and one sensing slot duration immediately after the duration T_{f}, where the duration T_{f} includes a sensing slot at the beginning thereof.
- Transmission(s) initiated by the base station including (i) a discovery burst only or (ii) a discovery burst multiplexed with non-unicast information, or
- Transmission(s) by the base station after a gap of 25 us from transmission(s) by the UE within a shared channel occupancy.

The type 2B DL CAP is applicable to transmission(s) performed by the base station after a gap of 16 us from transmission(s) by the UE within a shared channel occupancy time. In the type 2B DL CAP, the base station may perform transmission immediately after the channel is sensed to be idle for T_{f} = 16 us. T_{f} includes a sensing slot within 9 us from the end of the duration. The type 2C DL CAP is applicable to transmission(s) performed by the base station after a maximum of 16 us from transmission(s) by the UE within the shared channel occupancy time. In the type 2C DL CAP, the base station does not perform channel sensing before performing transmission.

Hereinafter, a method of transmitting an uplink signal through an unlicensed band will be described. For example, a method of transmitting an uplink signal through an unlicensed band may be applied to a method of transmitting a sidelink signal through an unlicensed band.

The UE may perform type 1 or type 2 CAP for UL signal transmission in an unlicensed band. In general, the UE may perform the CAP (e.g., type 1 or type 2) configured by the base station for UL signal transmission. For example, a UL grant scheduling PUSCH transmission (e.g., DCI formats 0_0 and 0_1) may include CAP type indication information for the UE.

### (1) Type 1 uplink (UL) CAP Method

In the type 1 UL CAP, the length of a time duration spanned by sensing slots sensed to be idle before transmission(s) is random. The type 1 UL CAP may be applied to the following transmissions.
- PUSCH/SRS transmission(s) scheduled and/or configured by the base station
- PUCCH transmission(s) scheduled and/or configured by the base station
- Transmission(s) related to a random access procedure (RAP)

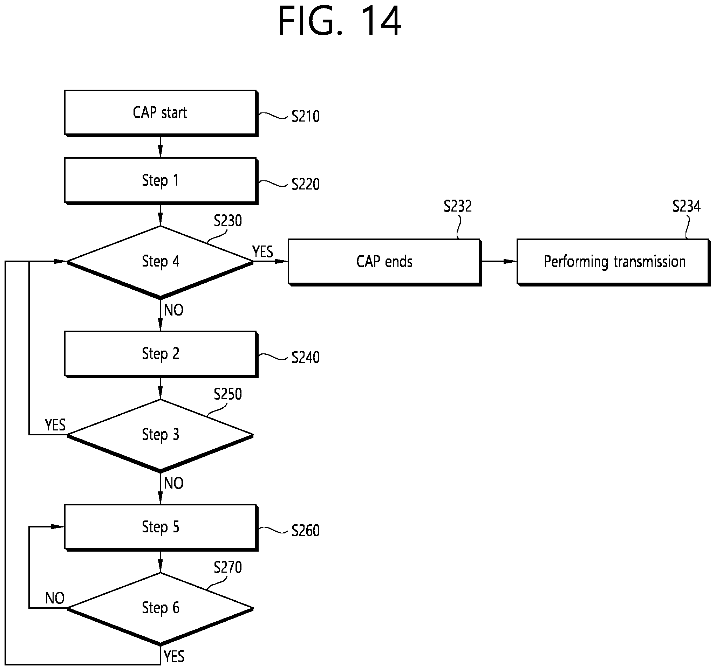

FIG. 14 shows type 1 CAP operations performed by a UE to transmit an uplink signal, based on an embodiment of the present disclosure. The embodiment of FIG. 14 may be combined with various embodiments of the present disclosure.

Referring to FIG. 14, the UE may sense whether a channel is idle for sensing slot durations of a defer duration T_{d}. Then, if a counter N is zero, the UE may perform transmission (S234). In this case, the UE may adjust the counter N by sensing the channel for additional sensing slot duration(s) according to the following steps:
Step 1) (S220) The UE sets N to Nᵢₙᵢₜ (N = Nᵢₙᵢₜ), where Nᵢₙᵢₜ is a random number uniformly distributed between 0 and CWₚ. Then, step 4 proceeds.
Step 2) (S240) If N>0 and the UE determines to decrease the counter, the UE sets N to N-1 (N = N-1).
Step 3) (S250) The UE senses the channel for the additional sensing slot duration. If the additional sensing slot duration is idle (Y), step 4 proceeds. Otherwise (N), step 5 proceeds.
Step 4) (S230) If N=0 (Y), the UE terminates the CAP (S232). Otherwise (N), step 2 proceeds.
Step 5) (S260) The UE senses the channel until either a busy sensing slot is detected within an additional defer duration T_{d} or all the slots of the additional defer duration T_{d} are detected to be idle.
Step 6) (S270) If the channel is sensed to be idle for all the slot durations of the additional defer duration T_{d} (Y), step 4 proceeds. Otherwise (N), step 5 proceeds.

Table 11 shows that mₚ, a minimum CW, a maximum CW, a maximum channel occupancy time (MCOT), and an allowed CW size, which are applied to the CAP, vary depending on channel access priority classes.

**[Table 11]**

| Channel Access Priority Class (p) | mₚ | CW_{min,p} | CW_{max,p} | T_{ulmcot,p} | allowed CWₚ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

Referring to Table 11, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

The defer duration T_{d} is configured in the following order: duration T_{f}(16 us) + mₚ consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on an explicit/implicit reception response for a previous UL burst (e.g., PUSCH) (CW size update). For example, CWₚ may be initialized to CW_{min,p} based on the explicit/implicit reception response for the previous UL burst. Alternatively, CWₚ may be increased to the next higher allowed value or maintained as it is.

### (2) Type 2 uplink (UL) CAP Method

In the type 2 UL CAP, the length of a time duration spanned by sensing slots sensed to be idle before transmission(s) may be determined. The type 2 UL CAP is classified into type 2A/2B/2C UL CAPs. In the type 2A UL CAP, the UE may perform transmission immediately after the channel is sensed to be idle at least for a sensing duration T_{short_dl} = 25 us. Herein, T_{short_dl} includes the duration T_{f}(=16 us) and one sensing slot duration immediately after the duration T_{f}. In the type 2A UL CAP, T_{f} includes a sensing slot at the beginning thereof. In the type 2B UL CAP, the UE may perform transmission immediately after the channel is sensed to be idle for the sensing duration T_{f}= 16 us. In the type 2B UL CAP, T_{f} includes a sensing slot within 9 us from the end of the duration. In the type 2C UL CAP, the UE does not perform channel sensing before performing transmission.

For example, according to the type 1 LBT-based NR-U operation, the UE having uplink data to be transmitted may select a CAPC mapped to 5QI of data, and the UE may perform the NR-U operation by applying parameters of the corresponding CACP (e.g., minimum contention window size, maximum contention window size, mₚ, etc.). For example, the UE may select a backoff counter (BC) after selecting a random value between the minimum CW and the maximum CW mapped to the CAPC. In this case, for example, the BC may be a positive integer less than or equal to the random value. The UE sensing a channel decreases the BC by 1 if the channel is idle. If the BC becomes zero and the UE detects that the channel is idle for the time T_{d} (T_{d} = T_{f} + mₚ * Tₛₗ), the UE may attempt to transmit data by occupying the channel. For example, Tₛₗ (= 9 usec) is a basic sensing unit or sensing slots, and may include a measurement duration for at least 4 usec. For example, the front 9 usec of T_{f}(= 16 usec) may be configured to be Tₛₗ.

For example, according to the type 2 LBT-based NR-U operation, the UE may transmit data by performing the type 2 LBT (e.g., type 2A LBT, type 2B LBT, or type 2C LBT) within COT.

For example, the type 2A (also referred to as Cat-2 LBT (one shot LBT) or one-shot LBT) may be 25 usec one-shot LBT. In this case, transmission may start immediately after idle sensing for at least a 25 usec gap. The type 2A may be used to initiate transmission of SSB and non-unicast DL information. That is, the UE may sense a channel for 25 usec within COT, and if the channel is idle, the UE may attempt to transmit data by occupying the channel.

For example, the type 2B may be 16 usec one-shot LBT. In this case, transmission may start immediately after idle sensing for a 16 usec gap. That is, the UE may sense a channel for 16 usec within COT, and if the channel is idle, the UE may attempt to transmit data by occupying the channel.

For example, in the case of the type 2C (also referred to as Cat-1 LBT or No LBT), LBT may not be performed. In this case, transmission may start immediately after a gap of up to 16 usec and a channel may not be sensed before the transmission. The duration of the transmission may be up to 584 usec. The UE may attempt transmission after 16 usec without sensing, and the UE may perform transmission for up to 584 usec.

In a sidelink unlicensed band, the UE may perform a channel access operation based on Listen Before Talk (LBT). Before the UE accesses a channel in an unlicensed band, the UE should check whether the channel to be accessed is idle (e.g., a state in which UEs do not occupy the channel, a state in which UEs can access the corresponding channel and transmit data) or busy (e.g., a state in which the channel is occupied and data transmission/reception is performed on the corresponding channel, and the UE attempting to access the channel cannot transmit data while the channel is busy). That is, the operation in which the UE checks whether the channel is idle or busy may be referred to as Clear Channel Assessment (CCA), and the UE may check whether the channel is idle or busy for the CCA duration.

In the present NR-U (Unlicensed), a communication method between a UE and a base station in unlicensed bands is supported. In addition, a mechanism to support communication between SL (Sidelink) UEs in the unlicensed band will be supported in Rel-18.

For example, an NR-U prior art may be as follows.

Channel: it may refer to a set of frequency domain resources over which LBT is performed. In NR, it may mean a 20 MHz LBT bandwidth, and may have the same meaning as RB set.

Channel occupancy (CO): It may refer to a time/frequency domain resource obtained by a base station or UE after a successful LBT.

Channel occupancy time (COT): It may refer to a time domain resource obtained by a base station or UE after a successful LBT. It may be shared between a base station (or, UE) and a UE (or, base station) that have obtained CO, and this operation may be referred to as COT sharing. For example, depending on the initiating device, it may be referred to as gNB-initiated COT or UE-initiated COT.

According to one embodiment of the present disclosure, an LBT type (or channel access procedure) for DL/UL transmission is described.
1. Type 1 (may be referred to as Cat-4 LBT): Channel access procedure based on random back-off.
   1.1. Cat-4: It may mean that a contention window is variable.
2. Type 2: In the case of COT sharing, it may be performed within a COT obtained by a gNB or a UE.
   2.1. Type 2A (may be referred to as Cat-2 LBT (one-shot LBT) or one-shot LBT): 25 usec one-shot LBT
      2.1.1. Transmission starts immediately after idle sensing for at least a 25 usec gap.
      2.1.2. It may be used for SSB and non-unicast DL information transmission.
   2.2. Type 2B (16 usec one-shot LBT)
      2.2.1. Transmission starts immediately after idle sensing for at least a 16 usec gap.
      2.3. Type 2C (may be referred to as Cat-1 LBT (no LBT is performed) or No LBT).
      2.3.1. Transmission starts immediately after a gap of up to 16 usec, and no channel is sensed before transmission.
      2.3.2. The maximum duration of a transmission is 584 usec.

According to one embodiment of the present disclosure, a channel access priority class (CAPC) is described. For example, CAPC 1 is corresponded to for SRB0/1/3, and a base station may configure which CAPC is corresponded to for SRB2 or DRB. For example, for standardized 5QI, the CAPCs are defined as shown in the table below, while for non-standardized 5QI, the CAPC that best matches the QoS characteristics may need to be used.

Table 12 shows a mapping relationship between CAPC and 5QI.

**[Table 12]**

| **CAPC** | **5QI** |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: lower CAPC value means higher priority | |

For example, a contention window size (CWS) and maximum COT value may be defined for each CAPC. For example, the equation Td=Tf + mp*Tsl may be established.

For DL communication, the contents of Table 13 may apply.

**[Table 13]**

| **Channel Access Priority Class (*p*)** | ***mₚ*** | ***CW_{min,p}*** | ***CW_{max,p}*** | ***T_{mcot,p}*** | **allowed *CWₚ* sizes** |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

For UL communication, the contents of Table 14 may apply.

**[Table 14]**

| **Channel Access Priority Class (*p*)** | ***mₚ*** | ***CW_{min,p}*** | ***CW_{max,p}*** | ***T_{ulm cot,p}*** | **allowed *CWₚ* sizes** |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6ms or 10 ms | {15,31,63,127,255,511,1023} |
| 4 | 7 | 15 | 1023 | 6ms or 10 ms | {15,31,63,127,255,511,1023} |

According to one embodiment of the present disclosure, a Type 1 LBT-based NR-U operation is proposed.

For example, if there is uplink data to be transmitted, a UE may select a CAPC that is mapped to the 5QI of that data and apply the parameters of that CAPC (e.g., Min Contention Window Size, Max Contention Window size, mₚ) to perform the NR-U operation. In other words, a UE may select a random value between 0 and CW (e.g., a CW value randomly selected by the UE between Min CW and Max CW) (or mapped to a CAPC) to determine the Backoff Counter (BC).

For example, a UE may sense a channel for a period of time T_{d} (T_{d}=T_{f}+ mₚ*Tₛₗ) and decrement BC by 1 if it is determined that the channel is idle. When BC reaches 0, the UE may occupy the channel and attempt to transmit data. If a collision is detected when transmission is attempted, the UE may increase the CW size mapped to the CAPC. In addition, for example, a UE may randomly reselect a BC from the range of 0 and the reselected CW through the increased CW. For example, the UE that succeeds in packet transmission may initialize the CW size, but may initialize it to the default value mapped to the SL-CAPC.

For example, Tₛₗ (= 9 usec) is a basic sensing unit or sensing slot and may include a measurement duration of at least 4 usec. For example, the first 9 usec of T_{f} (= 16 usec) may consist of Tₛₗ.

According to one embodiment of the present disclosure, a Type 2 LBT-based NR-U operation is proposed.

For example, a UE may perform a Type 2 LBT (Type 2A LBT, Type 2B LBT, Type 2C LBT) within a COT to perform data transmission.

For example, a Type 2A (Cat-2 or one-shot) LBT may mean a 25 usec one-shot LBT. For example, a transmission operation may start immediately after idle sensing for at least 25 usec gap. For example, the type 2A LBT may be used for initial SSB and non-unicast DL information transmission, i.e., in the type 2A LBT, a UE may sense a channel for 25 usec within the COT, and when the channel is idle, the UE may occupy the channel and attempt to transmit data.

For example, in a Type 2B (16 usec one-shot) LBT, the transmission operation may start immediately after idle sensing for at least 16 usec gap, i.e., in the above Type 2B LBT, a UE may sense the channel for 16 usec within the COT, and when the channel is idle, it may occupy the channel and attempt to transmit data.

For example, in a Type 2C (Cat-1 or No LBT) LBT (not performing LBT operation), a transmission operation may start immediately after a gap of up to 16 usec, and no channel sensing may be performed before the transmission. For example, the duration of the transmission may be up to 584 usec. For example, a UE may attempt to transmit after 16 usec without sensing, and may perform the transmission for up to 584 usec.

According to one embodiment of the present disclosure, in the sidelink unlicensed band, a UE may perform a listen before talk (LBT) based channel access operation. Before accessing a channel in an unlicensed band, a UE may need to check whether the access channel is idle (i.e., the channel is not occupied by UEs, and UEs can access the channel and transmit data) or busy (i.e., the channel is occupied and data transmission and reception operations are being performed on the channel, and a UE attempting to access the channel cannot transmit data while the channel is busy). In other words, the operation by which a UE checks whether a channel is idle or busy may be referred to as clear channel assessment (CCA), and the UE may check whether a channel is idle or busy during the CCA period.

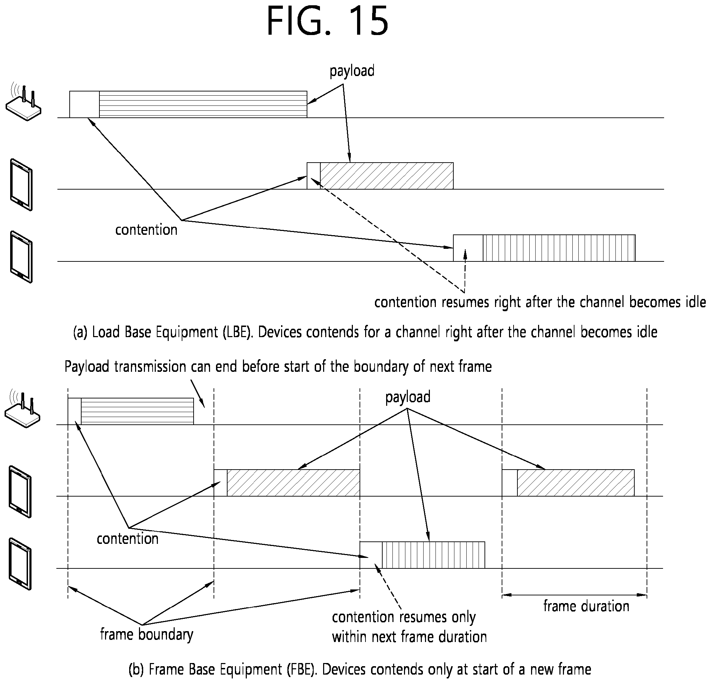

FIG. 15 shows a contention operation for a channel of an LBE and an FBE, according to one embodiment of the present disclosure. The embodiment of FIG. 15 may be combined with various embodiments of the present disclosure.

Referring to (a) of FIG. 15, a dynamic channel access procedure (load based equipment (LBE)) is shown. For example, a UE performs contention with other unlicensed band UEs to occupy a channel immediately as soon as the channel is idle, and the UE may transmit data after occupying the channel.

Referring to (b) of FIG. 15, a semi-static channel access procedure for frame based equipment (FBE) is shown. For example, a UE may perform contention with other unlicensed band UEs at the last point within the synchronized frame boundary (or, Fixed Frame Period), e.g., at a specific time (or, starting point) before the start of the next FFP, and the UE may transmit data after occupying the channel within the fixed frame period. A data transmission may need to be completed before the start of the next FFP.

For example, a UE that generates a COT may share the COT it has secured with a neighboring UE. For example, a UE that generates/secures a COT may deliver the COT it has secured to the other UE via SCI or MAC CE or PC5-RRC messages.

For example, a UE may transmit the COT that it has secured to the destination (pair of L1 source ID and L1 destination ID) UE related to the unicast link when it delivers it via SCI. Alternatively, for example, a UE that generates/secures a COT may transmit its secured COT to a groupcast/broadcast destination UE (groupcast/broadcast L1 destination ID).

For example, when a UE delivers a COT that it has secured through a MAC CE (e.g., a channel occupancy time (SL COT) information MAC CE), it may transmit to the destination (pair of L1/L2 source ID and L1/L2 destination ID) UE for a unicast link. Alternatively, for example, a UE that generates/secures a COT may transmit the COT it has secured to a groupcast/broadcast destination UE (groupcast/broadcast L1/L2 destination ID).

For example, a UE that receives a shared COT from a UE that generated the COT may perform a type 2 LBT operation within the shared COT after the UE that generated the COT has completed its transmission. For example, the type 2 LBT operation may include a type 2A LBT, a type 2B LBT, and a type 2C LBT. For example, according to the type 2A, type 2B LBT, the UE may transmit the SL data to be transmitted by it within the shared COT when it is checked that the channel has been idle for a certain period of time by performing a sensing operation. For example, according to the above Type 2C LBT, the UE may immediately transmit the SL data without sensing for a certain period of time.

While the above embodiment describes an embodiment where the COT is shared from a neighboring UE, a UE may also receive the COT for its own use from a base station.

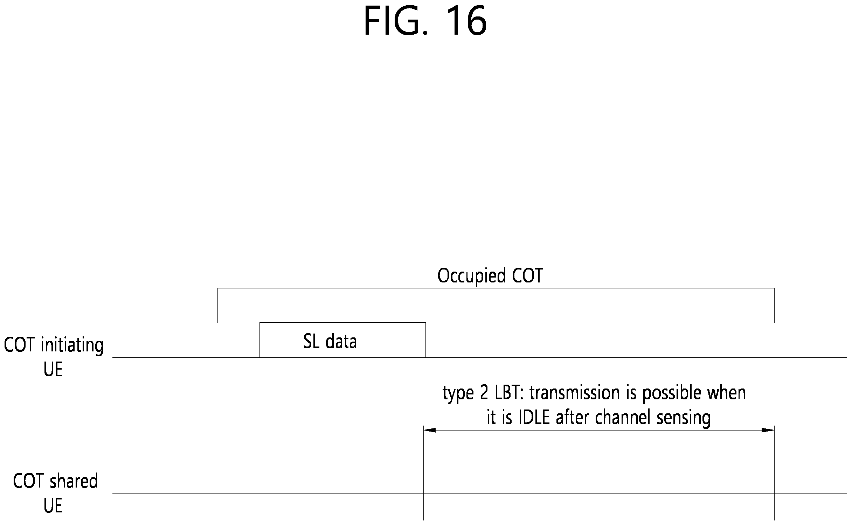

FIG. 16 shows an example of an operation performed within a Shared COT, according to one embodiment of the present disclosure. The embodiment of FIG. 16 may be combined with various embodiments of the present disclosure.

Referring to FIG. 16, a COT initiating UE may generate and share a COT, and a COT shared UE may receive the shared COT and perform a short LBT within the COT to transmit SL data. For example, the short LBT may refer to a type 2 class LBT, wherein the UE performing the short LBT performs sensing for a short period of time, rather than a random backoff based LBT, so that it can immediately perform SL data transmission if the channel condition is idle.

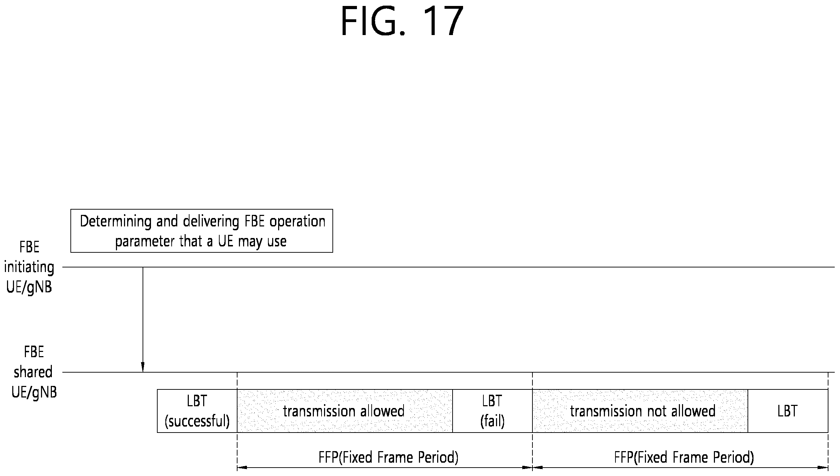

FIG. 17 shows an embodiment of an FBE operation, according to one embodiment of the present disclosure. The embodiment of FIG. 17 may be combined with various embodiments of the present disclosure.

Referring to FIG. 17, a base station or UE that configures the FBE configuration parameters (FFP and FFP starting offset) for an FBE operation may share the FBE parameters (FFP and FFP starting offset) that it has generated with the (other) UE. For example, a base station or UE that configures the FBE configuration parameters may deliver the generated FBE configuration parameters to the (other) UE via PDCCH or Dedicated RRC messages or SCI or MAC CE or PC5-RRC messages.

For example, when the secured FBE configuration parameters are delivered via SCI, the configured FBE configuration parameters may be transmitted to the destination (pair of L1 source ID and L1 destination ID) UE for a unicast link, and the configured FBE configuration parameters may be transmitted to the groupcast/broadcast destination UE (groupcast/broadcast L1 destination ID).

For example, when the configured FBE configuration parameters are delivered through a MAC CE, the generated FBE configuration parameters may be transmitted to the destination (pair of L1/L2 source ID and L1/L2 destination ID) UE for a unicast link, and the configured FBE configuration parameters may be transmitted to the groupcast/broadcast destination UE (groupcast/broadcast L1/L2 destination ID).

For example, a UE that has been shared with FBE configuration parameters by a base station or UE that generated the FBE configuration parameters may perform a type 2 LBT (type 2A or type 2B LTB) within the FFP and if it checks that the channel has been idle for a certain period of time (checking if the channel is idle at the end of the current FFP), it may transmit sidelink data at the beginning of the next FFP. A sidelink data transmission may need to be completed within an FFP. For example, if an LBT is performed at the end of an FFP, if an LBT failure occurs, the data may not be allowed to be transmitted in the next FFP. In another embodiment, the UE's LBT operation may be performed at the start of the FFP within the FFP.

According to one embodiment of the present disclosure, when a UE receives (or is shared with) a message including COT information or FBE configuration information (FFP and FFP start offset) from a counterpart UE, the UE may perform an unlicensed band COT operation or FBE operation using the shared and received COT information and FBE configuration information only if the UE checks whether the received COT information or FBE configuration information is configured for it and verifies that it is the COT information or FBE configuration information that it is supposed to use.

According to one embodiment of the present disclosure, (Proposal 1) a filtering method for COT information may be provided. For example, a UE may be shared with the COT information for its use by a neighboring UE via SCI or MAC CE or PC5 RRC messages.

For example, when a UE performing unicast communication receives a message (SCI or MAC CE or PC5 RRC message) including COT information from a neighboring UE, the UE may determine the 8-bit source layer (L)1 ID and the 16-bit destination L1 ID included in the 2^{nd} SCI related to the message including COT information. In this case, for example, the UE may perform a COT operation and an FBE operation using the COT information included in the received message only if the 8-bit source L1 ID included in the received 2^{nd} SCI and the LSB 8 bits of its destination L2 ID match, and at the same time the 16-bit destination L1 ID included in the received 2^{nd} SCI and the LSB 16 bits of its source L2 ID match. For example, this may be the case when a UE has verified that the received packet is the intended packet that it is supposed to receive.

Alternatively, for example, when a UE performing unicast communication receives a message (SCI or MAC CE or PC5 RRC message) including COT information from a counterpart UE, the UE may check the 8-bit source L1 ID and the 16-bit destination L1 ID included in the 2^{nd} SCI related to the message including COT information. In this case, for example, the UE may perform the COT operation described in the above embodiment using the COT information included in the received message, even if the 8-bit source L1 ID included in the received 2^{nd} SCI and the LSB 8 bits of its destination L2 ID do not match, or the 16-bit destination L1 ID included in the received 2^{nd} SCI and the LSB 16 bits of its source L2 ID do not match. For example, this may be the case where the UE has checked that the received packet is not the intended packet that it is supposed to receive.

The embodiments of the present disclosure may equally be applied in groupcast/broadcast communications, i.e., for example, when a message including COT configuration information is transmitted in a groupcast/broadcast manner, a UE receiving the message may check the destination L2 ID included in the received 2^{nd} SCI. In this case, for example, the UE may perform the COT operation described in the above disclosure using the received COT information only if it matches its own destination L2 ID. For example, the UE's own destination L2 ID may include a dedicated destination L2 ID for use when transmitting COT information messages in a groupcast/broadcast manner. Alternatively, for example, the UE's own destination L2 ID may include a destination L2 ID related to the transmission or reception of a service of interest of the UE.

According to one embodiment of the present disclosure, a dedicated destination L2 ID to be used when transmitting COT information messages in a groupcast/broadcast manner is defined. For example, when a UE transmits a COT information message (SCI or MAC CE or PC5 RRC message) in groupcast/broadcast manner, the UE may transmit the COT information message in groupcast/broadcast manner by including a partial 16-bit destination L1 ID of the dedicated destination L2 ID in the SCI and/or by including the remaining bits after including the partial 16-bit destination L1 ID in the SCI in the MAC subheader.

Alternatively, for example, when a UE receives a message including COT information (SCI or MAC CE or PC5 RRC message) from a counterpart UE in a groupcast/broadcast manner, the UE may check the 16-bit destination L1 ID included in the 2nd SCI related to the message including COT information. In this case, for example, even if the 16-bit destination L1 ID included in the 2nd SCI does not match the LSB 16 bits of the groupcast/broadcast dedicated destination L2 ID for transmission of its COT configuration information message, the UE may perform the COT operation described in the above disclosure using the COT information included in the message. For example, this may be the case where the UE has checked that the received packet is not the intended packet that it is supposed to receive.

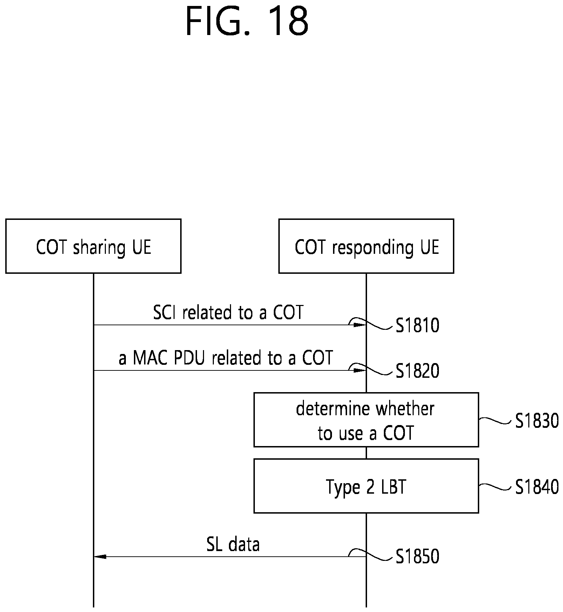

FIG. 18 shows a COT information sharing procedure for a COT sharing UE, according to one embodiment of the present disclosure. The embodiment of FIG. 18 may be combined with various embodiments of the present disclosure.

Referring to FIG. 18, a procedure for a COT sharing UE to communicate information about a COT to a responding UE is illustrated. For example, the COT sharing UE may be a UE that generates a COT, or receives it from the network and delivers it to the responding UE. On the other hand, for example, the responding UE may mean a UE that receives information for the COT from the COT sharing UE and performs a transmission to the COT sharing UE using the COT.

In step S1810, the COT sharing UE may transmit the SCI related to the COT to the responding UE. In step S1820, the COT sharing UE may transmit a MAC PDU related to the COT to the responding UE. For example, the COT may be transmitted via SCI, or may be transmitted via the MAC PDU. Alternatively, for example, information for the COT may be transmitted in divided pieces in the SCI and the MAC PDU.

In step S1830, the responding UE may determine whether to use the received information for the COT. In this case, for example, the responding UE may determine whether to use the information for the COT based on a source L1 ID included in the SCI, a destination L1 ID, a partial ID that is 16 bits LSB of the source L2 ID of the responding UE, and a partial ID that is 8 bits LSB of the destination L2 ID of the responding UE. For example, the responding UE may determine to use the information for the COT if the source L1 ID and the partial ID that is 8 bits are the same, and if the destination L1 ID and the partial ID that is 16 bits are the same. For example, in this embodiment, it is assumed that the responding UE determines to use information for the COT.

In step S1840, the responding UE may perform channel sensing based on a selected transmission resource within the COT. For example, the transmission resource may be a transmission resource included in an RB set related to the COT. For example, the channel sensing may include a type 2 LBT operation as described in the present disclosure. For example, the channel sensing may be performed from a time point before the time point of the transmission resource by a length of the sensing interval, to the time point of the transmission resource. For example, the responding UE may determine to perform a transmission operation for SL data based on the transmission resource, based on the result of the channel sensing being idle. For example, in this embodiment, it is assumed that the result of the channel sensing is idle.

In step S1850, the responding UE may transmit the SL data to the COT sharing UE based on the transmission resource. For example, the COT sharing UE may identify that the transmission of the SL data in the RB set is intended for it, based on the source/destination ID included in the PSCCH/PSSCH in which the SL data is transmitted being the same as the destination/source ID related to the transmission of information for the COT.

According to one embodiment of the present disclosure, (Proposal 2) an operation method for filtering configuration information may be proposed. For example, a UE may be shared with FBE configuration information (FFP and FFP start offset) for its use from a counterpart UE via SCI or MAC CE or PC5 RRC messages.

According to one embodiment of the present disclosure, a UE performing unicast communication may receive a message (SCI or MAC CE or PC5 RRC message) including FBE configuration information from a counterpart UE. At this time, the UE may determine the 8-bit source L1 ID and the 16-bit destination L1 ID included in the 2^{nd} SCI related to the message including the FBE configuration information. For example, the UE may perform an FBE operation using the FBE configuration information or FBE configuration information included in the received message only if the 8-bit source L1 ID included in the received 2^{nd} SCI and the LSB 8 bits of its destination L2 ID match, and at the same time, the 16-bit destination L1 ID included in the received 2^{nd} SCI and the LSB 16 bits of its source L2 ID match. For example, this may be the case when the UE has verified that the received packet is the intended packet that it is supposed to receive.

According to one embodiment of the present disclosure, a UE performing unicast communication may receive a message (SCI or MAC CE or PC5 RRC message) including FBE configuration information from a counterpart UE. At this time, the UE may check the 8-bit source L1 ID and the 16-bit destination L1 ID included in the 2^{nd} SCI related to the message including the FBE configuration information. For example, the UE may perform the FBE operation exemplified in the above embodiment using the FBE configuration information included in the message, even if the 8-bit source L1 ID included in the received 2^{nd} SCI and the LSB 8 bits of its destination L2 ID do not match, or the 16-bit destination L1 ID included in the received 2^{nd} SCI and the LSB 16 bits of its source L2 ID do not match. For example, this may be the case where the UE has checked that the received packet is not the intended packet that it is supposed to receive.

The embodiments of the present disclosure may be equally applied in groupcast/broadcast communication, i.e., for example, when a message including FBE configuration information is transmitted in a groupcast/broadcast manner, a UE receiving the message may check the destination L2 ID included in the received 2nd SCI. In this case, for example, the UE may perform the FBE operation exemplified in the above disclosure using the received FBE configuration information only if it matches its own destination L2 ID. For example, the UE's own destination L2 ID may include a dedicated destination L2 ID to be used when transmitting FBE configuration information messages in a groupcast/broadcast manner. Alternatively, for example, the UE's own destination L2 ID may include a destination L2 ID related to the transmission or reception of a service of interest of the UE.

According to one embodiment of the present disclosure, a dedicated destination L2 ID to be used when transmitting FBE configuration information messages in a groupcast/broadcast manner is defined. For example, when a UE transmits an FBE configuration information message (SCI or MAC CE or PC5 RRC message) in groupcast/broadcast manner, the UE may transmit the FBE configuration information message in groupcast/broadcast manner by including a partial 16-bit destination L1 ID of the dedicated destination L2 ID in the SCI, or by including the remaining bits after including the partial 16-bit destination L1 ID in the SCI in the MAC subheader.

Alternatively, for example, when a UE receives a message including FBE configuration information (SCI or MAC CE or PC5 RRC message) from a counterpart UE in groupcast/broadcast manner, the UE may check the 16-bit destination L1 ID included in the 2^{nd} SCI related to the message including FBE configuration information. In this case, for example, even if the 16-bit destination L1 ID included in the 2^{nd} SCI does not match the LSB 16 bits of the groupcast/broadcast dedicated destination L2 ID for transmitting its FBE configuration information message, the UE may perform the FBE operation exemplified in the above disclosure using the FBE configuration information included in the message. For example, this may be the case where the UE has determined that the received packet is not the packet that it was intended to receive.

According to one embodiment of the present disclosure, when a UE (e.g., a COT Responding UE) receives a shared COT (shared COT) from a counterpart UE (e.g., a COT Initiating UE), the UE may use the received shared COT if the following conditions are met. For example, the COT responding UE may include a UE that receives a shared COT and performs a type 2 LBT within the shared COT to transmit sidelink data. For example, the COT initiating UE may include a UE that generates and delivers a shared COT.
1. when the COT responding UE is within a specific distance from the COT initiating UE. For example, in this case, the SCI delivered by the COT initiating UE (SCI related to the shared COT transmission) may include the zone ID information of the COT initiating UE. Based on the zone ID information of the COT initiating UE, the COT responding UE may determine whether the COT initiating UE is located within a specific distance from it.
2. when the priority (or, L1 SL priority) of the logical channel of the sidelink data transmitted by a COT responding UE is greater than or equal to a threshold value. For example, the threshold value may be a value configured or pre-configured by a base station.
3. when the (remaining) packet delay budget (PDB) of the sidelink data transmitted by a COT responding UE is included within the shared COT duration, i.e., when the remaining PDB < the shared COT duration.
4. when the Radio Distance (e.g., RSRP) is less than or equal to a threshold value.
5. when the COT duration of the shared COT is greater than or equal to a threshold value.

According to one embodiment of the present disclosure, when a COT responding UE receives a plurality of shared COT information from a single UE (COT initiating UE), the COT responding UE may determine that the most recently received shared COT is a valid shared COT and perform a type 2 LBT for sidelink data transmission using the most recently received shared COT.

Alternatively, for example, when a COT responding UE receives a plurality of shared COT information from a single UE (COT initiating UE), the COT responding UE may determine an overlapping COT duration from all the received shared COTs as a valid COT duration and perform a type 2 LBT for sidelink data transmission using that COT.

Alternatively, for example, if a COT responding UE receives a plurality of shared COT information from a single UE (COT initiating UE), the COT responding UE may determine that all of the received shared COTs are valid shared COTs and perform a type 2 LBT for sidelink data transmission using all of the received shared COTs.

According to one embodiment of the present disclosure, when a UE receives a shared COT from a counterpart UE, and the UE needs to generate a COT, the UE may cause only regions other than the COT region of the received shared COT to be included in the COT it generates. In this way, half duplex problems with the counterpart UE may be avoided. For example, the cases where the UE may need to generate a COT may include: i) where the UE generates the COT itself and uses the generated COT to perform Type 2 LBT and transmit sidelink data; and ii) where the UE generates the COT to deliver COT information that is shared with the counterpart UE. For example, the COTs generated by the UE itself may include: i) a COT to be transmitted by the UE, which is a shared COT in the perspective of the counterpart; and ii) a COT generated by the UE for use in its own sidelink data transmission. For example, the half-duplex may refer to a problem where transmitting and receiving cannot be performed simultaneously, since transmitting and receiving need to be performed over a single communication line.

According to one embodiment of the present disclosure, a UE that performs a type 2 LBT within an FFP to transmit sidelink data by being shared with FBE configuration information may, upon receiving FBE configuration information from a counterpart UE (e.g., a UE that generates the FBE configuration information and delivers it to the UE), use the received FBE configuration information only if the following conditions are met.
1. if a UE that is shared with FBE configuration information and performs type 2 LBT within the FFP to transmit sidelink data is within a specific distance from a UE that generates and transmits FBE configuration information, zone ID information of a UE that delivers FBE configuration information may be included in the SCI (SCI related to the transmission of FBE configuration information) delivered by the UE that delivers FBE configuration information. For example, a UE receiving FBE configuration information may determine whether it is within a specific distance from the UE delivering the FBE configuration information based on the zone ID information of the UE delivering the FBE configuration information.
2. if the priority (or L1 SL priority) of the logical channel of the sidelink data transmitted by a UE performing type 2 LBT within the FFP by being shared with FBE configuration information to transmit sidelink data is greater than or equal to a threshold value (configured or pre-configured by a base station).
3. if the (remaining) PDB of sidelink data transmitted by a UE transmitting sidelink data by performing type 2 LBT within the FFP by being shared with FBE configuration information is included within the FFP interval, i.e., remaining PDB < FFP duration.
4. if radio distance (for example, RSRP) is less than or equal to a threshold value.
5. if the FFP in the FBE configuration information is greater than or equal to a threshold value.

Whether (a part of) the proposed schemes/rules of this disclosure are applied and/or the related parameter (e.g., threshold) may be configured specifically (or differently or independently), according to the specific SL-CAPC, SL-LBT type (e.g., Type 1 LBT, Type 2A LBT, Type 2B LBT, Type 2C LBT), whether Frame Based LBT (FBE) is applied, whether Load Based LBT (LBE) is applied, etc.

For example, whether (a part of) the proposed schemes/rules of this disclosure are applied and/or the related parameter (e.g., threshold) may be configured specifically (or, differently, or independently), according to a resource pool (e.g., resource pool with PSFCH configured, resource pool without PSFCH configured), congestion level, service priority (and/or type), QoS requirements (e.g., delay, reliability) or PQI, traffic type (e.g., (non)periodic generation), SL transmission resource allocation mode (Mode 1, Mode 2), Tx profile (e.g., a Tx profile indicating that it is a service that supports SL DRX operation, a Tx profile indicating that it is a service that an SL DRX operations is not required to be supported), and the like.

For example, whether (a part of) the proposed schemes/rules of this disclosure are applied and/or the related parameter (e.g., threshold) may be configured specifically (and/or, independently and/or, differently), for at least one of whether a PUCCH configuration is supported (e.g., a case where a PUCCH resource is configured or a case where a PUCCH resource is not configured), resource pool, service/packet type (and/or priority), QoS profile or QoS requirement (e.g., URLLC/EMBB traffic, reliability, latency), PQI, PFI, cast type (e.g., unicast, groupcast, broadcast), (resource pool) congestion level (e.g., CBR), SL HARQ feedback scheme (e.g., NACK Only feedback, ACK/NACK feedback), a case of a HARQ feedback enabled MAC PDU (and/or HARQ feedback disabled MAC PDU) transmission, whether a PUCCH-based SL HARQ feedback report operation is configured, a case of pre-emption (and/or re-evaluation) being (not) performed (or, -based resource reselection), (L2 or L1) (source and/or destination) identifier, (L2 or L1) (a combination of a source layer ID and a destination layer ID) identifier, (L2 or L1) (a combination of a pair of a source layer ID and a destination layer ID, and cast type) identifier, the direction of a pair of a source layer ID and a destination layer ID, a PC5 RRC connection/link, a case of an SL DRX is performed, an SL mode type (resource allocation mode 1, resource allocation mode 2), performing of (a)periodic resource reservation, a Tx profile (e.g., a Tx profile that indicates that it is a service supporting an SL DRX operation, a Tx profile that indicates that it is a service where an SL DRX operation is not needed to be supported).

Further, for example, whether to apply the proposals and proposed rules of this disclosure (and/or the related parameter setting values) may also be applied to mmWave SL operation.

According to the prior art, a UE that receives information for a COT may use the COT even if it is not the COT that was transmitted to it, which may cause a UE that is supposed to use the COT to be interfered with transmission operations on that COT. According to an embodiment of the present disclosure, even if a UE receives information for a COT, by causing the UE to use the COT only after determining whether it is the UE that is to use the COT based on its ID, the above problem may be solved.

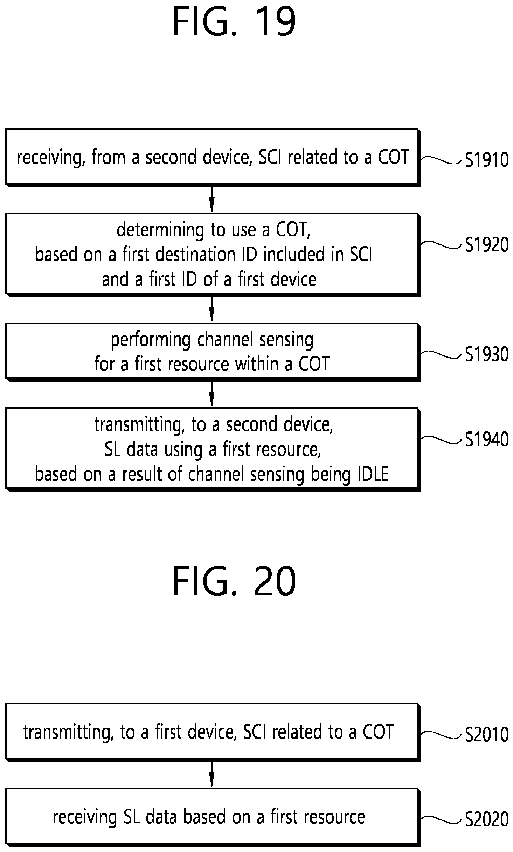

FIG. 19 shows a procedure for a first device to perform wireless communication, according to one embodiment of the present disclosure. The embodiment of FIG. 19 may be combined with various embodiments of the present disclosure.

Referring to FIG. 19, in step S1910, a first device may receive, from a second device, sidelink control information, SCI, related to a channel occupancy time, COT. In step S1920, the first device may determine to use the COT, based on a first destination identifier, ID, included in the SCI and a first ID of the first device. In step S1930, the first device may perform channel sensing for a first resource within the COT. In step S1940, the first device may transmit, to the second device, SL data using the first resource, based on a result of the channel sensing being IDLE.

For example, the COT may be related to a first resource block, RB, set, and the first resource may be included in the first RB set.

For example, the wireless communication may be unicast communication, and the first ID may be a first partial ID that is 16 least significant bits, LSBs, of a first source ID of the first device.

For example, the COT may be determined to be used, based on i) the first destination ID and the first partial ID being the same and ii) a second source ID included in the SCI and a second partial ID that is 8 LSBs of a second destination ID of the first device being the same.

For example, additionally, the first device may receive, from the second device, a medium access control, MAC, protocol data unit, PDU, related to the COT. For example, the COT may be determined to be used, based on i) the first destination ID and the first partial ID being the same, ii) the second source ID and the second partial ID being the same, iii) a third destination ID included in a MAC subheader of the MAC PDU and a third partial ID that is remaining 8 bits after excluding the first partial ID from the first source ID being the same, and iv) a third source ID included in the MAC subheader and a fourth partial ID that is remaining 16 bits after excluding the second partial ID from the second destination ID being the same.

For example, the wireless communication may be groupcast communication or broadcast communication, and the first ID may be a first partial ID that is 16 LSBs of a second destination ID related to the SL data.

For example, the COT may be determined to be used based on the first destination ID and the first partial ID being the same.

For example, additionally, the first device may receive, from the second device, a MAC PDU related to the COT. For example, the COT may be determined to be used, based on i) the first destination ID and the first partial ID being the same and ii) a third destination ID included in a MAC subheader of the MAC PDU and a second partial ID that is remaining 8 bits after excluding the first partial ID from the second destination ID being the same.

For example, the SCI may include information related to a frame based equipment, FBE.

For example, additionally, the first device may determine to use the information related to the FBE, based on the first destination ID and the first ID.

For example, the wireless communication may be unicast communication, and the first ID may be a first partial ID that is 16 LSBs of a first source ID of the first device.

For example, the information related to the FBE may be determined to be used, based on i) the first destination ID and the first partial ID being the same and ii) a second source ID included in the SCI and a second partial ID that is 8 LSBs of a second destination ID of the first device being the same.

For example, the wireless communication may be groupcast communication or broadcast communication, and the first ID may be a first partial ID that is 16 LSBs of a second destination ID related to the SL data.

The embodiments described above may be applied to various devices described below. First, a processor 102 of the first device 100 may control a transceiver 106 to receive, from a second device 200, sidelink control information, SCI, related to a channel occupancy time, COT. And, the processor 102 of the first device 100 may determine to use the COT, based on a first destination identifier, ID, included in the SCI and a first ID of the first device 100. And, the processor 102 of the first device 100 may perform channel sensing for a first resource within the COT. And, the processor 102 of the first device 100 may control the transceiver 106 to transmit, to the second device 200, SL data using the first resource, based on a result of the channel sensing being IDLE.

According to an embodiment of the present disclosure, a first device for performing wireless communication may be proposed. For example, the first device may comprise: at least one transceiver; at least one processor; and at least one memory operably connected to the at least one processor, and storing instructions that, based on being executed by the at least one processor, cause the first device to perform operations. For example, the operations may comprise: receiving, from a second device, sidelink control information, SCI, related to a channel occupancy time, COT; determining to use the COT, based on a first destination identifier, ID, included in the SCI and a first ID of the first device; performing channel sensing for a first resource within the COT; and transmitting, to the second device, SL data using the first resource, based on a result of the channel sensing being IDLE.

For example, the COT may be related to a first resource block, RB, set, and the first resource may be included in the first RB set.

For example, the wireless communication may be unicast communication, and the first ID may be a first partial ID that is 16 least significant bits, LSBs, of a first source ID of the first device.

For example, the COT may be determined to be used, based on i) the first destination ID and the first partial ID being the same and ii) a second source ID included in the SCI and a second partial ID that is 8 LSBs of a second destination ID of the first device being the same.

For example, additionally, the operations may further comprise: receiving, from the second device, a medium access control, MAC, protocol data unit, PDU, related to the COT. For example, the COT may be determined to be used, based on i) the first destination ID and the first partial ID being the same, ii) the second source ID and the second partial ID being the same, iii) a third destination ID included in a MAC subheader of the MAC PDU and a third partial ID that is remaining 8 bits after excluding the first partial ID from the first source ID being the same, and iv) a third source ID included in the MAC subheader and a fourth partial ID that is remaining 16 bits after excluding the second partial ID from the second destination ID being the same.

For example, the wireless communication may be groupcast communication or broadcast communication, and the first ID may be a first partial ID that is 16 LSBs of a second destination ID related to the SL data.

For example, the COT may be determined to be used based on the first destination ID and the first partial ID being the same.

For example, additionally, the operations may further comprise: receiving, from the second device, a MAC PDU related to the COT. For example, the COT may be determined to be used, based on i) the first destination ID and the first partial ID being the same and ii) a third destination ID included in a MAC subheader of the MAC PDU and a second partial ID that is remaining 8 bits after excluding the first partial ID from the second destination ID being the same.

For example, the SCI may include information related to a frame based equipment, FBE.

For example, additionally, the operations may further comprise: determining to use the information related to the FBE, based on the first destination ID and the first ID.

For example, the wireless communication may be unicast communication, and the first ID may be a first partial ID that is 16 LSBs of a first source ID of the first device.

For example, the information related to the FBE may be determined to be used, based on i) the first destination ID and the first partial ID being the same and ii) a second source ID included in the SCI and a second partial ID that is 8 LSBs of a second destination ID of the first device being the same.

For example, the wireless communication may be groupcast communication or broadcast communication, and the first ID may be a first partial ID that is 16 LSBs of a second destination ID related to the SL data.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: receiving, from a second UE, sidelink control information, SCI, related to a channel occupancy time, COT; determining to use the COT, based on a first destination identifier, ID, included in the SCI and a first ID of the first UE; performing channel sensing for a first resource within the COT; and transmitting, to the second UE, SL data using the first resource, based on a result of the channel sensing being IDLE.

According to an embodiment of the present disclosure, a non-transitory computer-readable storage medium storing instructions may be proposed. For example, the instructions, based on being executed, may cause a first device to: receive, from a second device, sidelink control information, SCI, related to a channel occupancy time, COT; determine to use the COT, based on a first destination identifier, ID, included in the SCI and a first ID of the first device; perform channel sensing for a first resource within the COT; and transmit, to the second device, SL data using the first resource, based on a result of the channel sensing being IDLE.

FIG. 20 shows a procedure for a second device to perform wireless communication, according to one embodiment of the present disclosure. The embodiment of FIG. 20 may be combined with various embodiments of the present disclosure.

Referring to FIG. 20, in step S2010, a second device may transmit, to a first device, sidelink control information, SCI, related to a channel occupancy time, COT. In step S2020, the second device may receive SL data based on a first resource. For example, the SL data may be transmitted based on a result of channel sensing for the first resource being IDLE, the first resource may be included within the COT, and the COT may be determined to be used, based on a first destination identifier, ID, included in the SCI and a first ID of the first device.

For example, the COT may be related to a first resource block, RB, set, and the first resource may be included in the first RB set.

The embodiments described above may be applied to various devices described below. First, a processor 202 of a second device 200 may control a transceiver 206 to transmit, to a first device 100, sidelink control information, SCI, related to a channel occupancy time, COT. And, the processor 202 of the second device 200 may control the transceiver 206 to receive SL data based on a first resource. For example, the SL data may be transmitted based on a result of channel sensing for the first resource being IDLE, the first resource may be included within the COT, and the COT may be determined to be used, based on a first destination identifier, ID, included in the SCI and a first ID of the first device 100.

According to an embodiment of the present disclosure, a second device for performing wireless communication may be proposed. For example, the second device may comprise: at least one transceiver; at least one processor; and at least one memory operably connected to the at least one processor, and storing instructions that, based on being executed by the at least one processor, cause the second device to perform operations. For example, the operations may comprise: transmitting, to a first device, sidelink control information, SCI, related to a channel occupancy time, COT; and receiving SL data based on a first resource, wherein the SL data may be transmitted based on a result of channel sensing for the first resource being IDLE, wherein the first resource may be included within the COT, and wherein the COT may be determined to be used, based on a first destination identifier, ID, included in the SCI and a first ID of the first device.

For example, the COT may be related to a first resource block, RB, set, and the first resource may be included in the first RB set.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

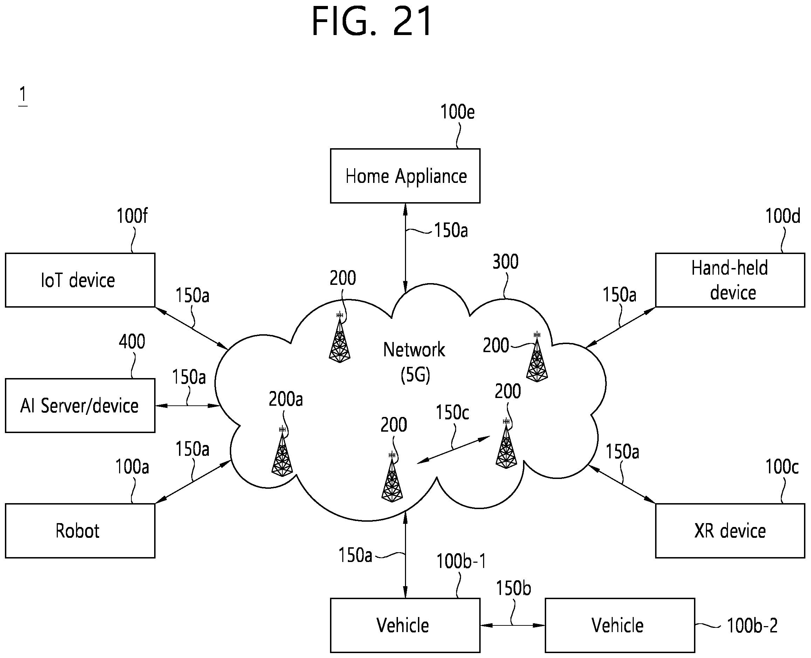

FIG. 21 shows a communication system 1, based on an embodiment of the present disclosure. The embodiment of FIG. 21 may be combined with various embodiments of the present disclosure.

Referring to FIG. 21, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

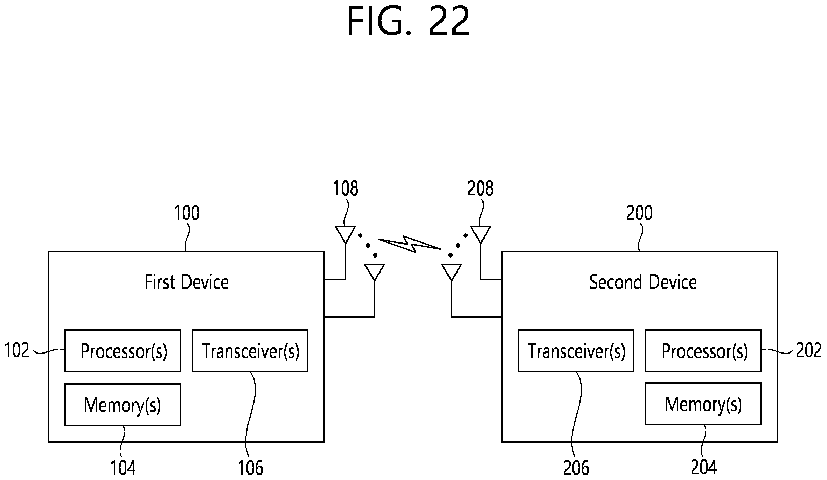

FIG. 22 shows wireless devices, based on an embodiment of the present disclosure. The embodiment of FIG. 22 may be combined with various embodiments of the present disclosure.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 21.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

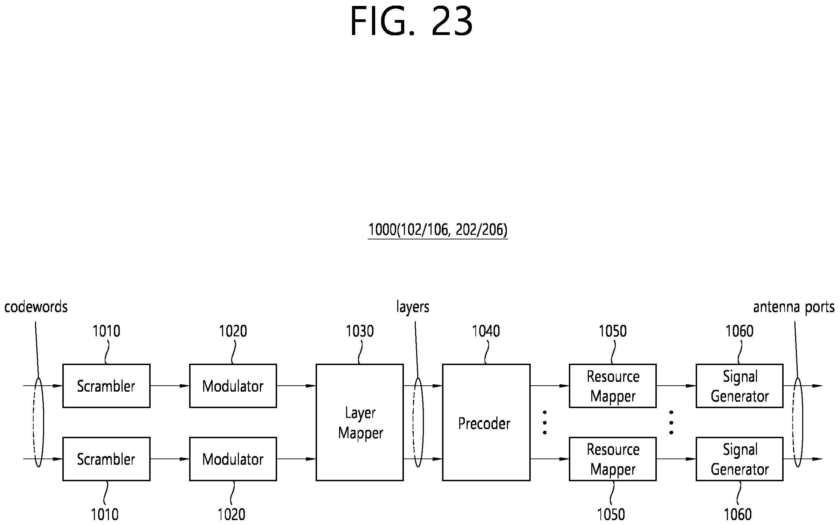

FIG. 23 shows a signal process circuit for a transmission signal, based on an embodiment of the present disclosure. The embodiment of FIG. 23 may be combined with various embodiments of the present disclosure.

Referring to FIG. 23, a signal processing circuit 1000 may include scramblers 1010, modulators 1020, a layer mapper 1030, a precoder 1040, resource mappers 1050, and signal generators 1060. An operation/function of FIG. 23 may be performed, without being limited to, the processors 102 and 202 and/or the transceivers 106 and 206 of FIG. 22. Hardware elements of FIG. 23 may be implemented by the processors 102 and 202 and/or the transceivers 106 and 206 of FIG. 22. For example, blocks 1010 to 1060 may be implemented by the processors 102 and 202 of FIG. 22. Alternatively, the blocks 1010 to 1050 may be implemented by the processors 102 and 202 of FIG. 22 and the block 1060 may be implemented by the transceivers 106 and 206 of FIG. 22.

Codewords may be converted into radio signals via the signal processing circuit 1000 of FIG. 23. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 23. For example, the wireless devices (e.g., 100 and 200 of FIG. 22) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

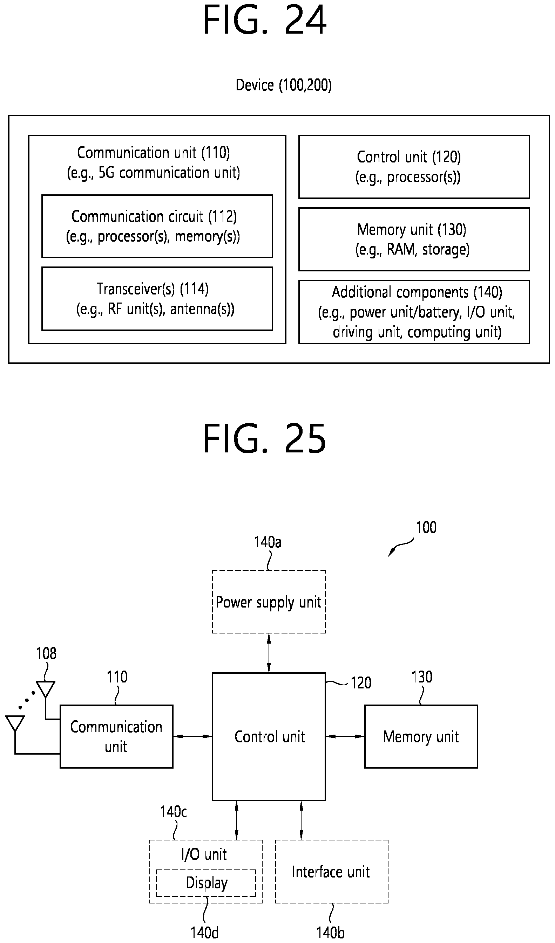

FIG. 24 shows another example of a wireless device, based on an embodiment of the present disclosure. The wireless device may be implemented in various forms according to a use-case/service (refer to FIG. 21). The embodiment of FIG. 24 may be combined with various embodiments of the present disclosure.

Referring to FIG. 24, wireless devices 100 and 200 may correspond to the wireless devices 100 and 200 of FIG. 22 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 22. For example, the transceiver(s) 114 may include the one or more transceivers 106 and 206 and/or the one or more antennas 108 and 208 of FIG. 22. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 21), the vehicles (100b-1 and 100b-2 of FIG. 21), the XR device (100c of FIG. 21), the hand-held device (100d of FIG. 21), the home appliance (100e of FIG. 21), the IoT device (100f of FIG. 21), a digital broadcast terminal, a hologram device, a public safety device, an MTC device, a medicine device, a fintech device (or a finance device), a security device, a climate/environment device, the AI server/device (400 of FIG. 21), the BSs (200 of FIG. 21), a network node, etc. The wireless device may be used in a mobile or fixed place according to a use-example/service.

In FIG. 24, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 24 will be described in detail with reference to the drawings.

FIG. 25 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 25 may be combined with various embodiments of the present disclosure.

Referring to FIG. 25, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 24, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

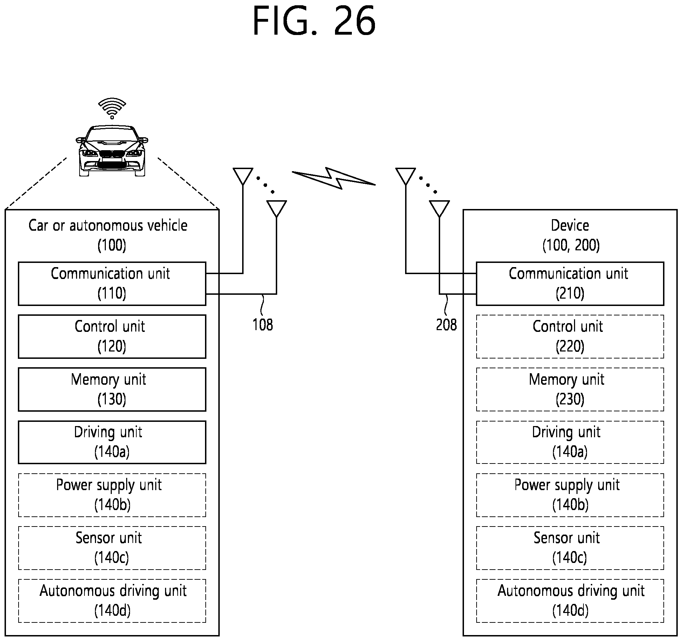

FIG. 26 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 26 may be combined with various embodiments of the present disclosure.

Referring to FIG. 26, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 24, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing, by a first device, wireless communication, the method comprising:
receiving, from a second device, sidelink control information, SCI, related to a channel occupancy time, COT;
determining to use the COT, based on a first destination identifier, ID, included in the SCI and a first ID of the first device;
performing channel sensing for a first resource within the COT; and
transmitting, to the second device, SL data using the first resource, based on a result of the channel sensing being IDLE.

2. The method of claim 1, wherein the COT is related to a first resource block, RB, set, and
wherein the first resource is included in the first RB set.

3. The method of claim 1, wherein the wireless communication is unicast communication, and
wherein the first ID is a first partial ID that is 16 least significant bits, LSBs, of a first source ID of the first device.

4. The method of claim 3, wherein the COT is determined to be used, based on i) the first destination ID and the first partial ID being the same and ii) a second source ID included in the SCI and a second partial ID that is 8 LSBs of a second destination ID of the first device being the same.

5. The method of claim 4, further comprising:
receiving, from the second device, a medium access control, MAC, protocol data unit, PDU, related to the COT,
wherein the COT is determined to be used, based on i) the first destination ID and the first partial ID being the same, ii) the second source ID and the second partial ID being the same, iii) a third destination ID included in a MAC subheader of the MAC PDU and a third partial ID that is remaining 8 bits after excluding the first partial ID from the first source ID being the same, and iv) a third source ID included in the MAC subheader and a fourth partial ID that is remaining 16 bits after excluding the second partial ID from the second destination ID being the same.

6. The method of claim 1, wherein the wireless communication is groupcast communication or broadcast communication, and
wherein the first ID is a first partial ID that is 16 LSBs of a second destination ID related to the SL data.

7. The method of claim 6, wherein the COT is determined to be used based on the first destination ID and the first partial ID being the same.

8. The method of claim 7, further comprising:
receiving, from the second device, a MAC PDU related to the COT,
wherein the COT is determined to be used, based on i) the first destination ID and the first partial ID being the same and ii) a third destination ID included in a MAC subheader of the MAC PDU and a second partial ID that is remaining 8 bits after excluding the first partial ID from the second destination ID being the same.

9. The method of claim 1, wherein the SCI includes information related to a frame based equipment, FBE.

10. The method of claim 9, further comprising:
determining to use the information related to the FBE, based on the first destination ID and the first ID.

11. The method of claim 10, wherein the wireless communication is unicast communication, and
wherein the first ID is a first partial ID that is 16 LSBs of a first source ID of the first device.

12. The method of claim 11, wherein the information related to the FBE is determined to be used, based on i) the first destination ID and the first partial ID being the same and ii) a second source ID included in the SCI and a second partial ID that is 8 LSBs of a second destination ID of the first device being the same.

13. The method of claim 10, wherein the wireless communication is groupcast communication or broadcast communication, and
wherein the first ID is a first partial ID that is 16 LSBs of a second destination ID related to the SL data.

14. A first device for performing wireless communication, the first device comprising:
at least one transceiver;
at least one processor; and
at least one memory operably connected to the at least one processor, and storing instructions that, based on being executed by the at least one processor, cause the first device to perform operations,
wherein the operations comprise:
receiving, from a second device, sidelink control information, SCI, related to a channel occupancy time, COT;
determining to use the COT, based on a first destination identifier, ID, included in the SCI and a first ID of the first device;
performing channel sensing for a first resource within the COT; and
transmitting, to the second device, SL data using the first resource, based on a result of the channel sensing being IDLE.

15. A device adapted to control a first user equipment, UE, the device comprising:
at least one processor; and
at least one memory operably connected to the at least one processor and storing instructions that, based on being executed by the at least one processor, cause the first UE to perform operations,
wherein the operations comprise:
receiving, from a second UE, sidelink control information, SCI, related to a channel occupancy time, COT;
determining to use the COT, based on a first destination identifier, ID, included in the SCI and a first ID of the first UE;
performing channel sensing for a first resource within the COT; and
transmitting, to the second UE, SL data using the first resource, based on a result of the channel sensing being IDLE.

16. A non-transitory computer-readable storage medium storing instructions that, based on being executed, cause a first device to:
receive, from a second device, sidelink control information, SCI, related to a channel occupancy time, COT;
determine to use the COT, based on a first destination identifier, ID, included in the SCI and a first ID of the first device;
perform channel sensing for a first resource within the COT; and
transmit, to the second device, SL data using the first resource, based on a result of the channel sensing being IDLE.

17. A method for performing, by second device, wireless communication, the method comprising:
transmitting, to a first device, sidelink control information, SCI, related to a channel occupancy time, COT; and
receiving SL data based on a first resource,
wherein the SL data is transmitted based on a result of channel sensing for the first resource being IDLE,
wherein the first resource is included within the COT, and
wherein the COT is determined to be used, based on a first destination identifier, ID, included in the SCI and a first ID of the first device.

18. The method of claim 17, wherein the COT is related to a first resource block, RB, set, and
wherein the first resource is included in the first RB set.

19. A second device for performing wireless communication, the second device comprising:
at least one transceiver;
at least one processor; and
at least one memory operably connected to the at least one processor, and storing instructions that, based on being executed by the at least one processor, cause the second device to perform operations,
wherein the operations comprise:
transmitting, to a first device, sidelink control information, SCI, related to a channel occupancy time, COT; and
receiving SL data based on a first resource,
wherein the SL data is transmitted based on a result of channel sensing for the first resource being IDLE,
wherein the first resource is included within the COT, and
wherein the COT is determined to be used, based on a first destination identifier, ID, included in the SCI and a first ID of the first device.

20. The method of claim 19, wherein the COT is related to a first resource block, RB, set, and
wherein the first resource is included in the first RB set.
